# EUROPEAN PATENT APPLICATION

(11) **EP 3 476 487 A2**
(43) Date of publication of application: **01.05.2019**
(21) Application number: 18203434.8
(22) Date of filing: 30.10.2018
(51) Int. Cl.: B02C 18/14, B02C 18/18

(54) **ROTARY REDUCING COMPONENT**

(30) Priority: 30.10.2017 US 201762578982 P
(71) Applicant: Vermeer Manufacturing Company, Pella, IA 50219-0200 (US)
(72) Inventor: Weinberg, Clint, Pella, IA Iowa 50219 (US); Daining, Stephen, Pella, IA Iowa 50219 (US)
(74) Representative: Hoffmann Eitle

(57) **Abstract**

A material reducing apparatus includes a rotary reducing component (110) that has a central rotational axis (112). The material reducing apparatus includes a reducing element mount (118) attached to the rotary reducing component (110) and a reversible reducing element (116) mounted to the reducing element mount (118). The reducing element (116) includes a leading front side that has a first cutting edge (130a) and an opposite second cutting edge (130b) being radially inwardly positioned closer to the central rotational axis (112) from the first cutting edge (130a). The reducing element (116) has a chip curl angle between about 79 degrees and 102 degrees. The reducing element (116) has a radial height extending away from the rotary reducing component (110). The material reducing apparatus includes at least one chip evacuation arrangement that includes three depth control structures. The depth control structures that are axially adjacent the reducing element have radial heights less than or equal to 25% of the radial height of the reducing element.

## Description

### Background

Material reducing machines are machines used to reduce the size of material by processes such as mulching, chipping, grinding, cutting, or like actions. A typical material reducing machine includes a rotary reducing component that reduces material as the material reducing component rotates about a central axis. In certain examples, the rotary reducing component works in combination with other structures such as screens or anvils to facilitate the material reduction process. In certain examples, the rotary reducing component includes a main rotating body (e.g., a rotor, drum, plate stack, or like structures) and a plurality of reducing elements (e.g., knives, cutters, reducing elements, blades, hammers, teeth, or like structures) carried by the main rotating body. In certain examples, the reducing elements are positioned about a circumference of the main rotating body and are configured to define a circular cutting boundary as the rotary reducing component is rotated about its central axis.

A forestry mower is an example of one type of material reducing machine. A forestry mower typically includes a vehicle such as a tractor or skid-steer vehicle. A material reducing head is coupled to the vehicle (e.g., by a pivot arm or boom). The material reducing head includes a rotary reducing component, which often incorporates a rotating drum that carries a plurality of reducing elements (e.g., blades, teeth, etc.). The material reducing head can be raised and lowered relative to the vehicle, and can also be pivoted/tilted forward and backward relative to the vehicle. By raising the reducing head and tilting the reducing head back, the forestry mower can be used to strip branches from trees and other aerial applications. By lowering the reducing head and pivoting the reducing head forward, the forestry mower can readily be used to clear brush, branches, and other material along the ground.

The design of reducing elements varies drastically for a wide range of applications. However, the design of reducing elements can drastically affect the operation of the material reducing machine. For example, the arrangement of a cutting element can reduce both the effectiveness and efficiency of a material reducing machine.

Therefore, improvements in reducing element design are needed.

### Summary

The present disclosure relates generally to a material reducing apparatus. In one possible configuration, and by non-limiting example, a tooth having an increased chipping productivity is disclosed.

In one example of the present disclosure, a material reducing apparatus is disclosed. The material reducing apparatus includes a rotary reducing component that has a central rotational axis. The rotary reducing component being rotatable in a reducing direction. The material reducing apparatus includes a reducing element mount attached to the rotary reducing component and a reversible reducing element mounted to the reducing element mount. The reducing element includes a leading front side having a main front face, a first cutting edge, and an opposite second cutting edge being radially inwardly positioned closer to the central rotational axis from the first cutting edge. The reducing element including a trailing rear side having a mounting face and a front face reference plane defined by the main front face. The material reducing apparatus includes a radial reference plane that is defined by the leading most point of the first cutting edge in the reducing direction and the central rotation axis of the rotary reducing component. The material reducing apparatus includes a chip direction plane that is perpendicular with the radial reference plane and passing through the leading most part of the first cutting edge. The chip direction plane and the front face reference plane are angled with respect to one another at a chip curl angle. The chip curl angle is between about 82 degrees and 102 degrees. The rotary reducing component has a reducing boundary defined by the outer most cutting edge of the first and second cutting edges from the rotary reducing component. The reducing boundary has a diameter less than or equal to about 26 inches.

In another example of the present disclosure, a material reducing apparatus is disclosed. The material reducing apparatus includes a rotary reducing component that has a central rotational axis. The rotary reducing component being rotatable in a reducing direction. The material reducing apparatus includes a reducing element mount attached to the rotary reducing component and a reversible reducing element mounted to the reducing element mount. The reducing element includes a leading front side having a main front face, a first cutting edge, and an opposite second cutting edge being radially inwardly positioned closer to the central rotational axis from the first cutting edge. The reducing element including a trailing rear side having a mounting face and a front face reference plane defined by the main front face. The material reducing apparatus includes a radial reference plane that is defined by the leading most point of the first cutting edge in the reducing direction and the central rotation axis of the rotary reducing component. The material reducing apparatus includes a chip direction plane that is perpendicular with the radial reference plane and passing through the leading most part of the first cutting edge. The chip direction plane and the front face reference plane are angled with respect to one another at a chip curl angle. The chip curl angle is between about 79 degrees and about 97 degrees. The rotary reducing component has a reducing boundary defined by the outer most cutting edge of the first and second cutting edges from the rotary reducing component. The reducing boundary has a diameter greater than or equal to 26 inches and less than or equal to about 56 inches.

In another example, a material reducing apparatus is disclosed. The material reducing apparatus includes a rotary reducing component having a central rotational axis. The rotary reducing component is rotatable in a reducing direction. The material reducing apparatus includes a reducing element mount attached to the rotary reducing component and a reducing element mounted to the reducing element mount. The reducing element includes a leading face that has a cutting edge. The reducing element includes a pair of side faces that extend from the leading face to a rear trailing face. The rear trailing face is mounted to the reducing element mount and the side faces are axially spaced from one another on the rotary reducing component. The reducing element has a radial height extending away from the rotary reducing component. The material reducing apparatus includes at least one chip evacuation arrangement that includes a first depth control structure that has a reducing element portion circumferentially aligned and spaced from the leading face of reducing element on the rotary reducing component. The reducing element portion has a radial depth being at least half of the radial height of the reducing element. The chip evacuation arrangement includes a second depth control structure positioned axially adjacent a side of the reducing element. The second depth control structure has a radial height immediately axially adjacent to the reducing element that is less than or equal to 25% of the radial height of the reducing element. The chip evacuation arrangement includes a third depth control structure positioned axially adjacent the side of the reducing element, opposite the second depth control structure. The third depth control structure has a radial height immediately axially adjacent to the reducing element that is less than or equal to 25% of the radial height of the reducing element.

A variety of additional aspects will be set forth in the description that follows. The aspects can relate to individual features and to combinations of features. It is to be understood that both the foregoing general description and the following detailed description are exemplary and explanatory only and are not restrictive of the broad inventive concepts upon which the embodiments disclosed herein are based.

### Brief Description of the Drawings

The following drawings are illustrative of particular embodiments of the present disclosure and therefore do not limit the scope of the present disclosure. The drawings are not to scale and are intended for use in conjunction with the explanations in the following detailed description. Embodiments of the present disclosure will hereinafter be described in conjunction with the appended drawings, wherein like numerals denote like elements.
FIG. 1 illustrates a perspective view of a material reducing apparatus according to one embodiment of the present disclosure.
FIG. 2 illustrates a side view of the material reducing apparatus of FIG. 1.
FIG. 3 illustrates a schematic longitudinal cross section of the material reducing apparatus of FIG. 1.
FIG. 4 illustrates a perspective view of a rotary reducing component, according to one embodiment of the present disclosure.
FIG. 5 illustrates a front view of the rotary reducing component of FIG. 4.
FIG. 6 illustrates a side view of the rotary reducing component of FIG. 4.
FIG. 7 illustrates a schematic side view of the rotary reducing component of FIG. 4.
FIG. 8 illustrates a perspective view of a reducing element and a reducing element mount, according to one embodiment of the present disclosure.
FIG. 9 illustrates an exploded view of the reducing element and the reducing element mount of FIG. 8.
FIG. 10 illustrates a front view of the reducing element and the reducing element mount of FIG. 8.
FIG. 11 illustrates a cross-sectional view of the reducing element and the reducing element mount along line 11-11 in FIG. 10.
FIG. 12 illustrates a front perspective view of the reducing element of FIG. 8.
FIG. 13 illustrates a rear perspective view of the reducing element of FIG. 8.
FIG. 14 illustrates a front view of the reducing element of FIG. 8.
FIG. 15 illustrates a cross-sectional view of the reducing element along line 15-15 in FIG. 14.
FIG. 16 illustrates a rear view of the reducing element of FIG. 8.
FIG. 17 illustrates a side view of the reducing element of FIG. 8.
FIG. 18 illustrates a front perspective view of a reducing element, according to one embodiment of the present disclosure.
FIG. 19 illustrates a side view of the reducing element of FIG. 18.
FIG. 20 illustrates a front perspective view of a reducing element, according to one embodiment of the present disclosure.
FIG. 21 illustrates a side view of the reducing element of FIG. 20.
FIG. 22 illustrates a schematic side view of the reducing element of FIG. 8 mounted to the rotary reducing element of FIG. 4.
FIG. 23 illustrates a schematic side view of the reducing element of FIG. 18 mounted to the rotary reducing element of FIG. 4.
FIG. 24 illustrates a schematic side view of the reducing element of FIG. 20 mounted to the rotary reducing element of FIG. 4.
FIG. 25 illustrates a side view of a reducing element mount, according to one embodiment of the present disclosure.
FIG. 26 illustrates a front perspective view of the reducing element mount of FIG. 25.
FIG. 27 illustrates a rear perspective view of the reducing element mount of FIG. 25.
FIG. 28 illustrates a perspective view of a rotary reducing component, according to one embodiment of the present disclosure.
FIG. 29 illustrates a top schematic view of a portion of the rotary reducing component of FIG. 28.
FIG. 30 illustrates a front perspective view of a portion of the rotary reducing component of FIG. 28.
FIG. 31 illustrates a rear perspective view of a portion of the rotary reducing component of FIG. 28.
FIG. 32 illustrates another front perspective view of a portion of the rotary reducing component of FIG. 28.
FIG. 33 illustrates another rear perspective view of a portion of the rotary reducing component of FIG. 28.
FIG. 34 illustrates another front perspective view of a portion of the rotary reducing component of FIG. 28.
FIG. 35 illustrates another rear perspective view of a portion of the rotary reducing component of FIG. 28.
FIG. 36 illustrates a schematic side view of a depth control device, according to one embodiment of the present disclosure.
FIG. 37 illustrates a schematic side view of a depth control device, according to one embodiment of the present disclosure.
FIG. 38 illustrates a schematic side view of a depth control device, according to one embodiment of the present disclosure.

### Detailed Description

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

The machine and associated rotary reducing component and reducing element design disclosed herein have several advantages. For example, the rotary reducing component and reducing element are configured to achieve a high productivity during a material reducing operation. Further, the rotary reducing component and reducing element disclosed herein are configured to be resilient to foreign material strikes and perform after being sharpened multiple times. Further still, the reducing elements are configured to be reversible, having a pair of cutting edges to increase the overall life of the reducing element.

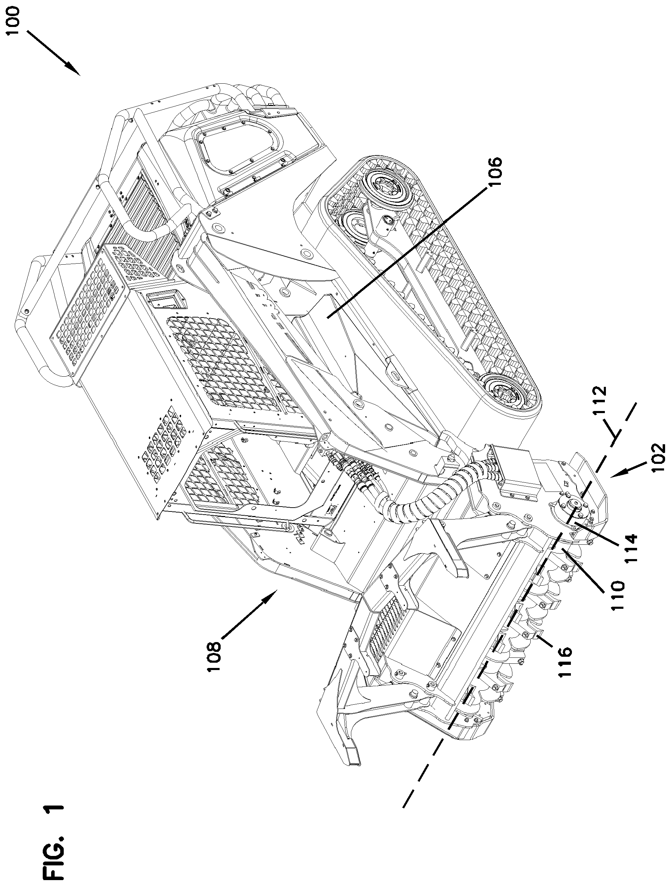

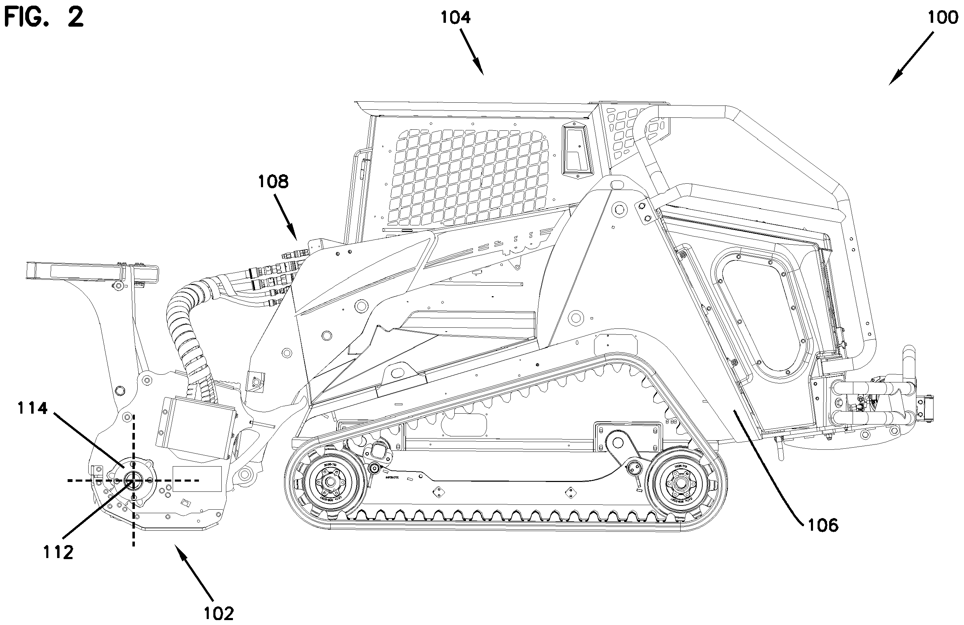

FIGS. 1-3 illustrate a material reducing apparatus in accordance with the principles of the present disclosure. As depicted, the material reducing apparatus is shown as a forestry machine 100 (also known, for example, as a forestry mower or forestry mulcher) including a material reducing head 102 carried by a vehicle 104. The vehicle 104 is depicted as a track loader, but could be any other type of vehicle, such as a wheeled or tracked tractor. The vehicle 104 includes a main frame 106. A linkage (e.g., a boom 108 including a boom arm, a pair of spaced-apart boom arms, or other structures) connects the material reducing head 102 to the main frame 106 of the vehicle 104. The boom 108 can be pivoted up and down to raise and lower the material reducing head 102 relative to the main frame 106. Further, the material reducing head 102 can pivot to tilt forwardly and rearwardly relative to the main frame 106.

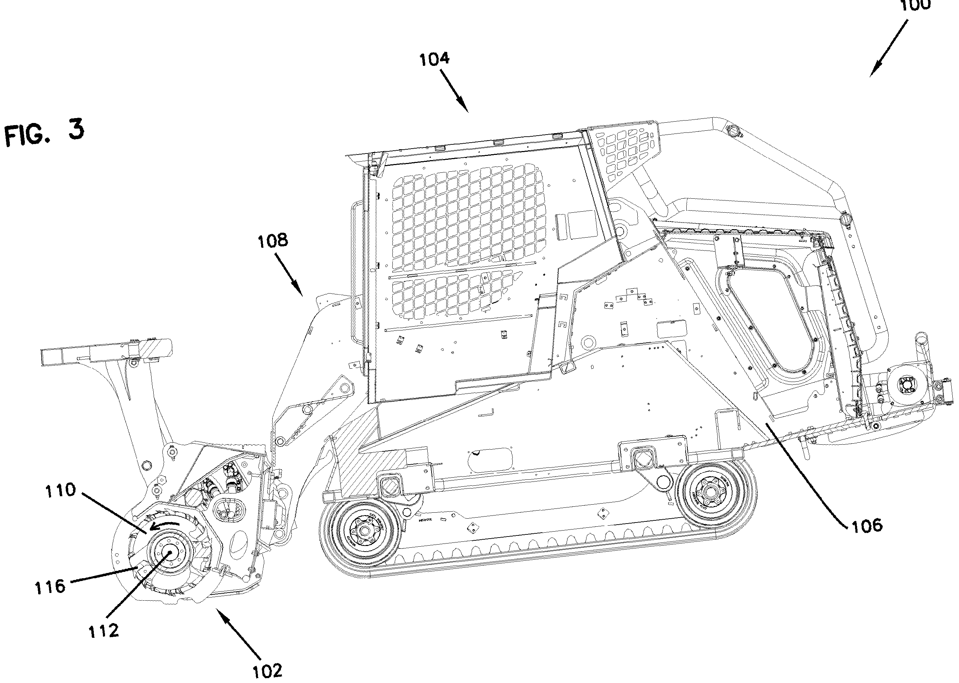

The material reducing head 102 includes a rotary reducing component 110 (e.g., a rotor/drum) that is rotated about a central axis 112. At least one motor 114 can be provided for rotating the rotary reducing component 110 about the central axis 112. The rotary reducing component 110 can include a drum, shaft, or other main body which carries a plurality of reducing elements 116. During normal operation, when viewing the cross-section of the rotary reducing component 110 from the left side of the forestry machine 100 (as shown in FIG. 3), the rotary reducing component 110 rotates in a counter clockwise direction.

While shown as forestry machine 100, it is contemplated to be within the scope of the present disclosure that the rotary reducing component 110 and reducing elements 116 can be utilized on a wide range of machines that utilize a rotary reducing component. For example, the rotary reducing component 110 and reducing elements 116 can be used in a grinder machine such as a horizontal grinder, tub grinder, brush chipper or the like. An example of a horizontal grinder can be found in U.S. Patent No. 9,168,535; an example of a tub grinder can be found in U.S. Patent No. 9,505,007; and an example of a brush chipper can be found in U.S. Patent No. 9,409,310; all of which are hereby incorporated by reference in their entirety.

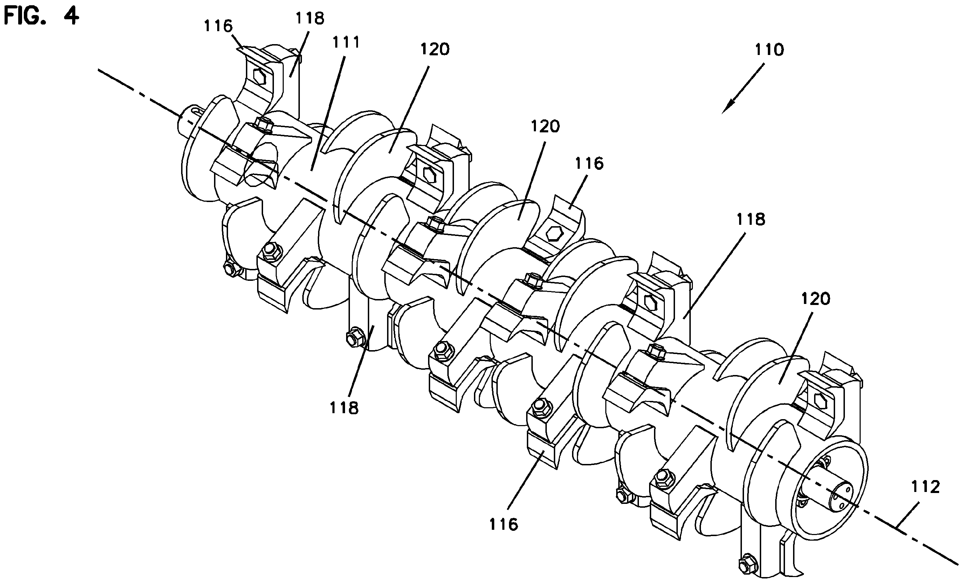

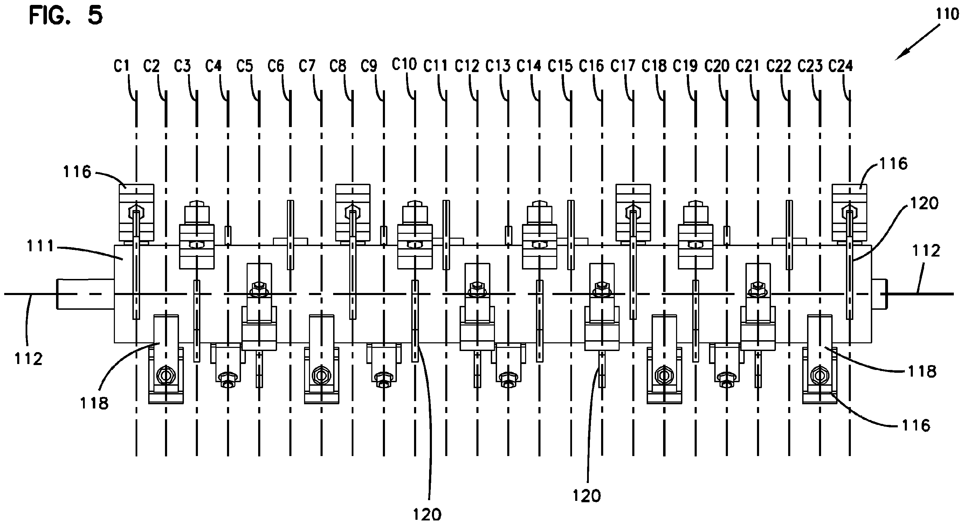

FIG. 4 shows a perspective view of the rotary reducing component 110. FIG. 5 shows a front view of the rotary reducing component 110. The rotary reducing component 110 includes the plurality of reducing elements 116 mounted to a plurality of reducing element mounts 118. The reducing element mounts 118 are mounted to a main body 111 (i.e., a hollow shaft, a drum, a plurality of discs, a plurality of bars, etc.). Further, the rotary reducing component 110 includes a plurality of depth control devices 120.

The rotary reducing component 110 has a plurality of cutting paths (labeled C1-C24) spaced along the central axis 112 of the rotary reducing component 110. Each of the cutting paths is defined by or coincides with a single one of the reducing elements 116. Thus, during reducing, each path makes only one impact per revolution of the rotary reducing component 110. The rotary reducing component 110 can have a range of different qualities of reducing elements 116 mounted thereto. Further, the rotary reducing component 110 can be a variety of different diameters and lengths depending on its application.

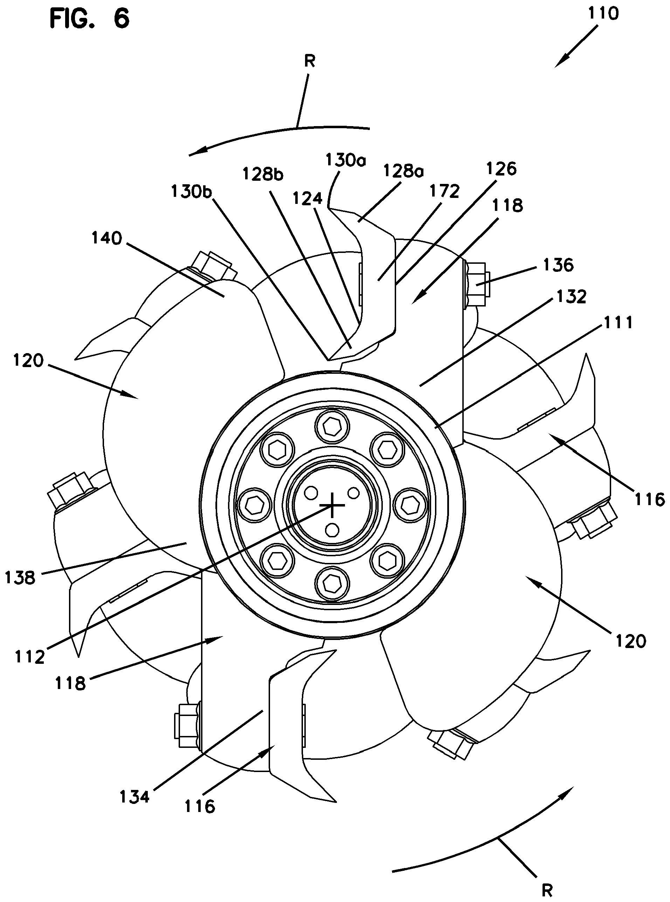

The reducing elements 116 are relatively sharp, block-like cutters suitable for chipping. As shown in FIG. 6 in the side view of the rotary reducing component 110, each of the reducing elements 116 includes a main body 122 and have a leading face 124 (e.g., a front side) and a trailing face 126 (e.g., a rear side). In some examples, the leading face 124 can be concave. In some examples, each reducing element 116 is at least partially ornamental in nature and features nonfunctional elements.

Further, each reducing element 116 is reversible in that each reducing element includes a pair of cutting heads 128a, 128b. The cutting heads 128a, 128b each include a cutting edge 130a, 130b that define a cutting plane. Further, the first and second cutting edge 130a, 130b also define at an interface between the leading face 124 and the trailing face 126. The edges 130a, 130b can be relatively sharp and can extend generally across an entire width of the main body 122 of the reducing element 116.

In operation, the reducing element 116 can be mounted in a first orientation where the cutting edge 130a is positioned to encounter material that will be reduced. Alternatively, the reducing element 116 can be mounted in a first orientation where the cutting edge 130b is positioned to encounter material that will be reduced. The cutting edge 130a/130b that is performing the reducing operation can be referred to as the live cutting edge. In operation, the user can alter which cutting edge 130a, 130b is the live cutting edge by rotating the reducing element 116 to a position wherein the intended live cutting edge is positioned further away from the main body 111 of the rotary reducing component 110 as compared to the opposite, corresponding cutting edge 130a, 130b. This allows the user to choose a cutting edge 130a, 130b based on the characteristic of the cutting edge (e.g., sharpness and/or general cutting edge condition). Further, it allows the user to continue using a reducing element 116 even if one cutting edge 130a, 130b becomes damaged. Finally, it gives the user two sharpened cutting edges 130a, 130b that allow the user to perform a reducing operation without having to stop to sharpen reducing elements 116.

When the reducing element 116 is secured to the reducing element mount 118, the trailing face 126 abuts against the reducing element mount 118, and the leading face 124 faces toward the direction of rotation (as shown by arrows R in FIG. 6).

Each reducing element mount 118 is coupled with the main body 111 of the rotary reducing component 110 at a base 132 and coupled with a reducing element 116 at a reducing element mount leading face 134 via a fastener 136. Each reducing element mount 118 extends radially away from the main body 111 so that the reducing element mount leading face 134 faces in the direction of the rotation R.

Each depth control device 120 is configured to limit the depth of cut of each corresponding reducing element 116. Further, each depth control device 120 aids in controlling depth of nearby or adjacent reducing elements in the case where the material to be cut is wider than a single reducing element. As shown in FIG. 5, a depth control device 120 is paired with each reducing element 116. Specifically, the depth control device 120 is mounted to the main body 111 of the rotary reducing component 110 adjacent each reducing element 116 and reducing element mount 118 so that, during rotation of the rotary reducing component 110, the depth control device 120 passes by a point prior to the reducing element 116 and the reducing element mount 118. Therefore, the depth of cut of each corresponding reducing element 116 is equal to the difference in radial height between an outer surface of the depth control device 120 and the cutting edge 130a. In some examples, the depth control device 120 can be plate-like. In other examples, the depth control device 120 can have an adjustable radial height. In other examples still, the depth control device 120 can have an increasing radial height from a leading edge 138 to a trailing edge 140, where the trailing edge 140 is nearer the reducing element 116 than the leading edge 138.

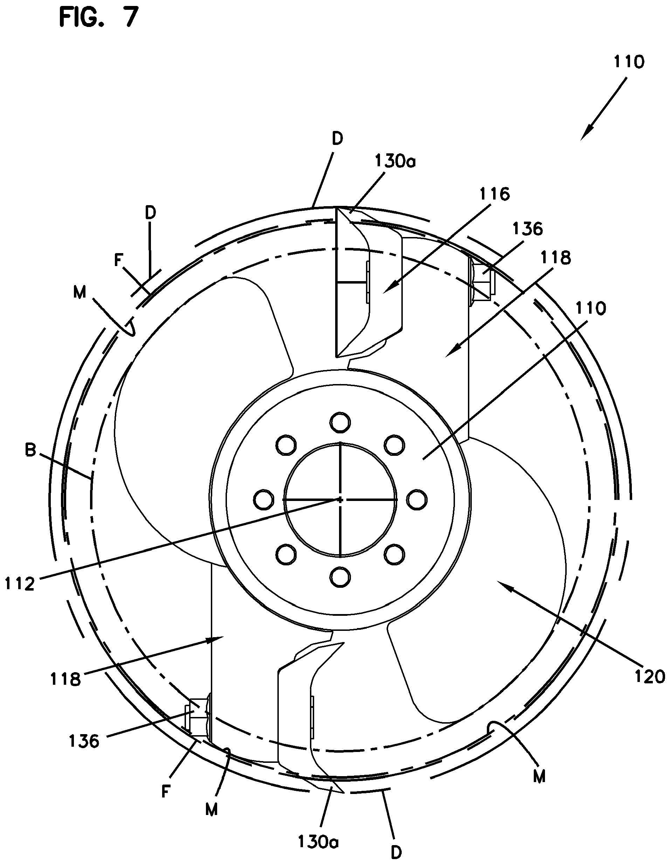

FIG. 7 shows a schematic side view of the rotary reducing component 110. As the rotary reducing component 110 is rotated, the reducing elements 116 define a reducing boundary D. Specifically, the cutting edge 130a defines the reducing boundary D. In some examples, the reducing boundary D has a diameter less than about 56 inches. In other examples, the reducing boundary D has a diameter less than about 56 inches and greater than about 26 inches. In other examples still, the reducing boundary D has a diameter less than or equal to about 26 inches. In some examples, the reducing boundary D has a diameter equal to about 18 inches. The diameter of the reducing boundary D can change over time as the reducing elements 116 wear and are sharpened.

Further, during rotation, a portion of fastener 136 defines a fastener boundary F. The diameter of the fastener boundary F is less than the reducing boundary D. Such a configuration prevents the fastener 136 from first striking a material to be reduced before the reducing element 116. This prevents premature wear on the fastener 136. In some examples, the diameter of the fastener boundary F is about 95% of the diameter of the reducing boundary D. In some examples, the diameter of the fastener boundary F is less than the diameter of the reducing boundary D to allow for sufficient sharpening on the cutting edge 130a.

The reducing element mount 118 defines a mount boundary M that has a diameter less than the diameter of the reducing boundary D. In some examples, the mount boundary M has a diameter less than the diameter of the fastener boundary F.

Finally, the depth control device 120 defines a depth control boundary B that is less the reducing boundary D, mount boundary M, and fastener boundary F.

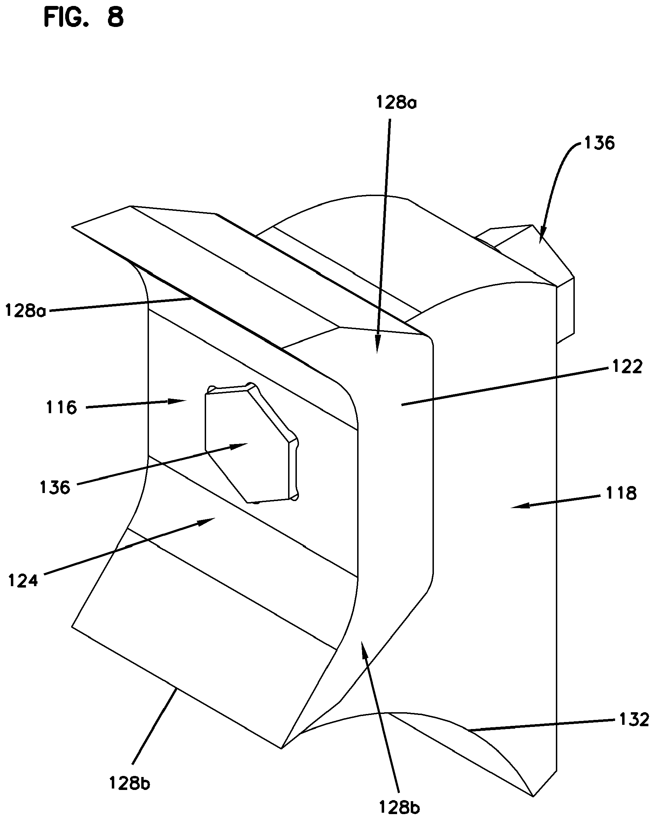

FIG. 8 shows the reducing element 116 mounted to the reducing element mount 118 via the fastener 136.

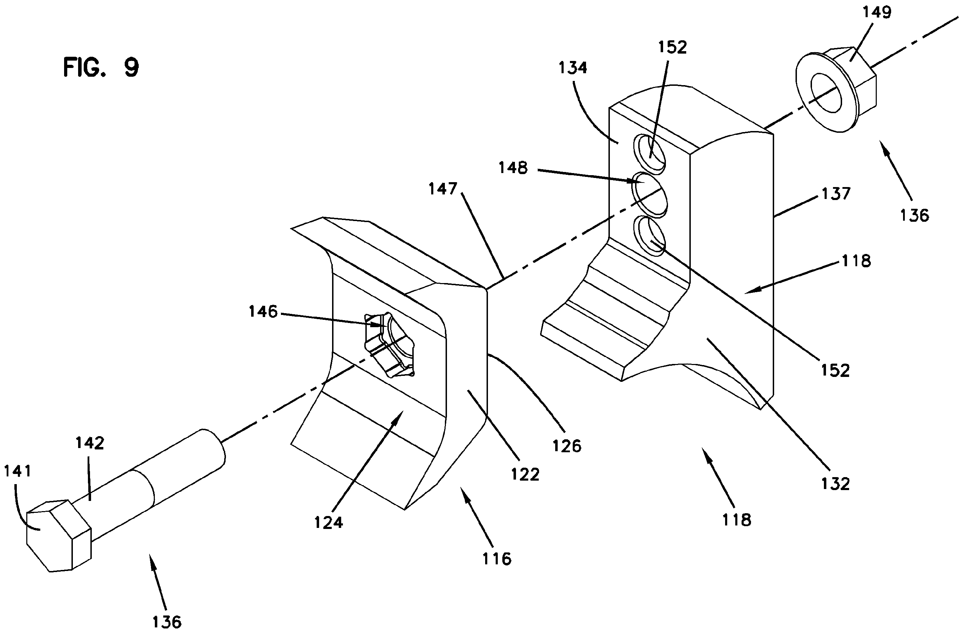

FIG. 9 shows an exploded view of the reducing element 116, the reducing element mount 118, and the fastener 136. As shown, the fastener 136 includes a bolt 142 and a nut 144. The reducing element 116 includes a fastener opening 146 having a central axis 147 that is configured to receive the bolt 142 of the fastener 136. The fastener opening 146 extends though the main body 122 from the leading face 124 to the trailing face 126. In some examples, the fastener opening 146 can have a shape that is configured to receive a head 141 of the bolt 142.

The reducing element mount 118 also includes a fastener opening 148 that is configured to receive the bolt 142 of the fastener 136. The fastener opening 148 extends through the reducing element mount leading face 134 to a trailing face 137.

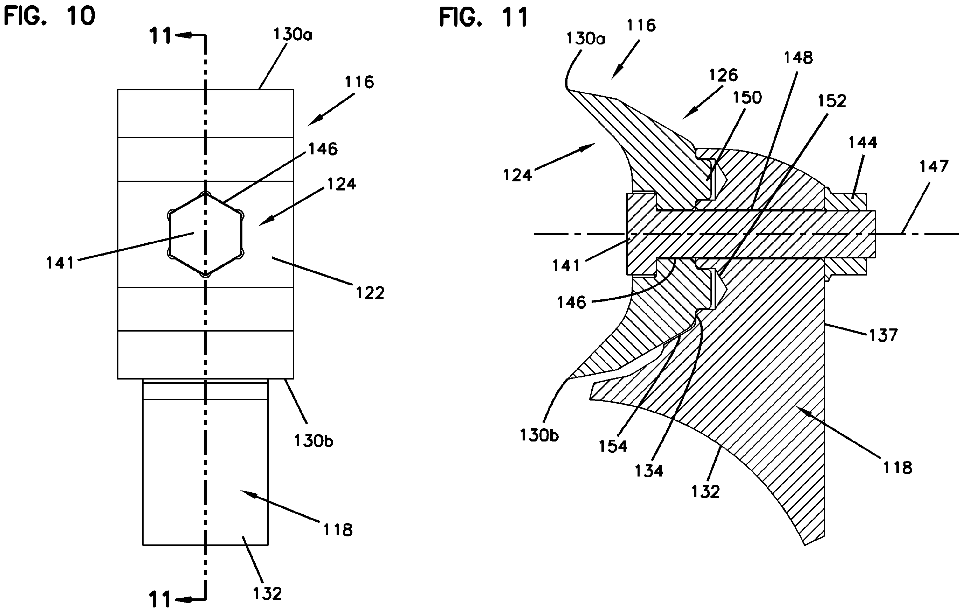

FIG. 10 shows a front view of the reducing element 116 mounted to the reducing element mount 118 via the fastener 136.

FIG. 11 shows a cross sectional view along line 11-11 in FIG. 10. As shown, the fastener 136, specifically the bolt 142, passes through the fastener opening 146 of the reducing element 116 and the fastener opening 148 of the reducing element mount 118. In the depicted embodiment, the bolt 142 is secured to the nut 144 at the trailing face 137 of the reducing element mount. In some examples, the head 141 of the bolt 142 is recessed in the main body 122 of the reducing element 116. In other examples, the head 141 of the bolt 142 is positioned in contact with the trailing face 137 of the reducing element mount and the nut is in contact with the main body 122 of the reducing element 116.

When the reducing element 116 is mounted to the reducing element mount 118, the reducing element mount 118 supports the reducing element 116 in multiple locations. The reducing element 116 can include a pair of projections 150 extending from the trailing face 126. The pair of projections 150 are received and supported by a pair of recesses 152 disposed within the reducing element mount leading face 134 of the reducing element mount 118. In some examples, the projections 150 are cylindrical in shape; however, they can be a variety of different shapes. In some examples, the projections 150 are tapered. In some examples, the recesses 152 are generally cylindrical in shape; however, they can be a variety of different shapes. In some examples, the recesses 152 are tapered.

The reducing element mount 118 can also include a ledge 154 (e.g., a radial load support surface) adjacent the reducing element mount leading face 134 that is configured to support at least a portion of the trailing face 126 of the reducing element 116. In some examples, the ledge 154 is configured to support the reducing element 116 against a force in a radial direction toward the base 132 of the reducing element mount 118, and specifically a force in a radial direction toward the central axis 112 of the rotary reducing component 110, as shown in FIG. 6.

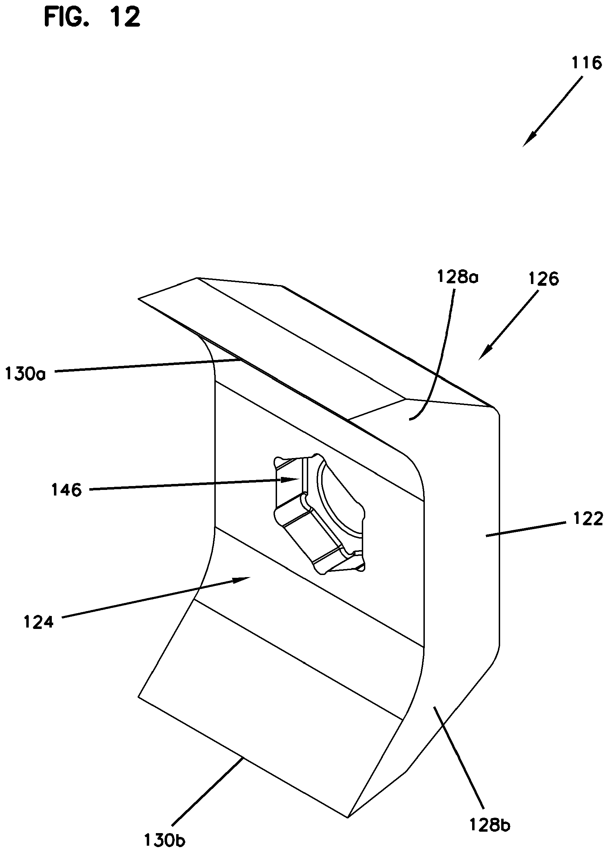

FIG. 12 shows a perspective view of the reducing element 116 from the leading face 124. As shown, the cutting heads 128a, 128b extend away from the main body 122 of the reducing element to create a concave, leading face 124.

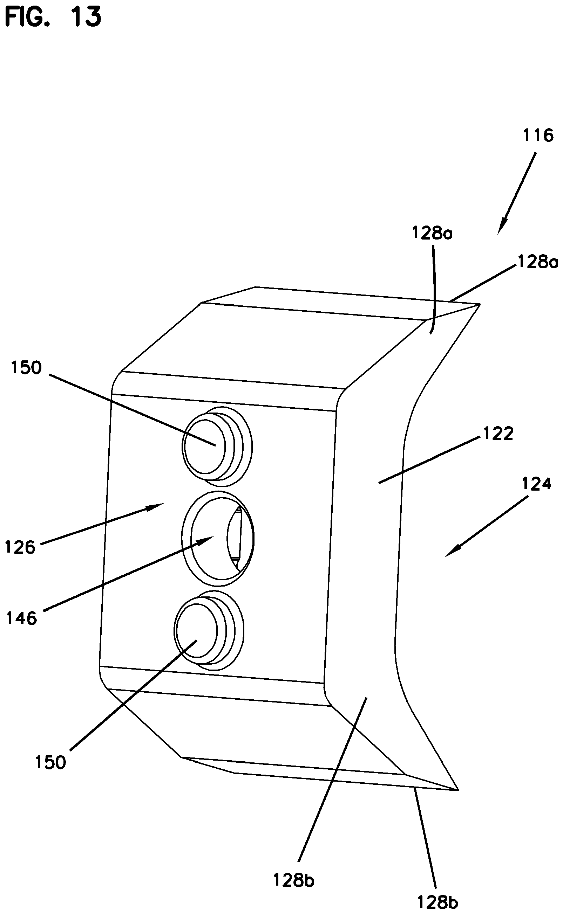

FIG. 13 shows a perspective view of the reducing element 116 from the trailing face 126. As shown, the projections 150 extend from the trailing face 126.

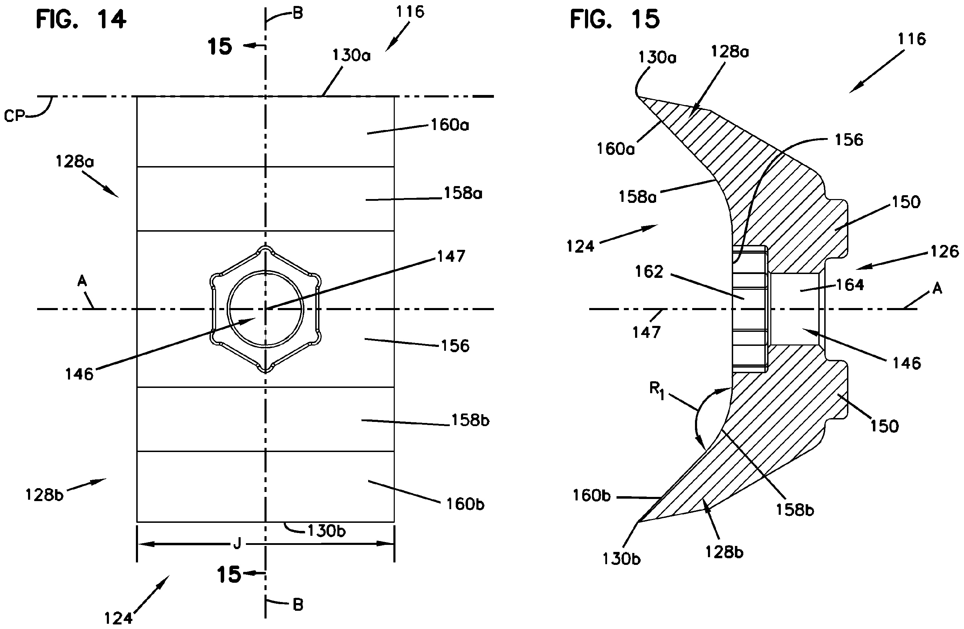

FIG 14 shows a front view of the reducing element 116 from the leading face 124. FIG. 15 shows a cross section of the reducing element 116 along line 15-15 in FIG. 14. The leading face 124 includes a plurality of distinct surfaces. Specifically, the leading face 124 includes a central (i.e. main) surface 156, a first transition surface 158a, a second transition surface 158b, a first rake surface 160a, and a second rake surface 160b. The first transition surface 158a is between the first rake surface 160a and the central surface 156, and the second transition surface 158b is between the second rake surface 160b and the central surface 156. As shown, the first rake surface 160a helps to define the cutting edge 130a, and the second rake surface 160b helps to define the cutting edge 130b. In some examples, the rake and transition surfaces 160a, 160b, 158a, 158b can each have a facetted construction comprising a plurality of sub surfaces. The central surface 156 can have a variety of different shapes and configuration. In some examples, the central surface 156 is planer. In other examples, the central surface 156 can have an assortment of angles and shapes.

The first and second transition surfaces 158a, 158b each have a radius R₁. In some examples, the radius R₁ for both the first and second transition surfaces 158a, 158b is between about .25 inches and 1.25 inches. In some examples, the radius R₁ is about 0.5 inches. In some examples, the radius R₁ is about 1.0 inches.

As shown in FIGS. 14-15, a horizontal reference plane A horizontally bisects the central surface 156 and passes through the central axis 147 of the fastener opening 146. In the depicted example, the reducing element 116 is symmetrical about reference plane A. Further, a vertical reference plane B vertically bisects the central surface 156, the first transition surface 158a, the second transition surface 158b, the first rake surface 160a, and the second rake surface 160b and passes through the central axis 147 of the fastener opening 146. In the depicted example, the reducing element 116 is symmetrical about reference plane B.

FIG. 15 also shows the fastener opening 146 having a first passage 162 and a second passage 164. The first passage 162 can be configured to receive the fastener 136 (e.g., the head 141 of the bolt 142 or the nut 144).

As shown in FIGS. 14-15, the cutting edges 130a, 130b are linearly continuous across a width J of the reducing element 116. In some examples, the cutting edges 130a, 130b are linearly discontinuous across the width J of the reducing element 116 but together form a linear cutting plane CP. For example, the reducing element 116 can include a plurality of points that form a linear cutting edge. In other examples still, the reducing element 116 can include angled sub-cutting edges that form a single cutting edge. In such an example, the angled cutting edges can form a leading point or edge(s) or a leading edge(s). For purposes of the present disclosure, the leading point or leading edge in such an example can form the cutting plane CP.

In some examples, the cutting edges 130a, 130b can be formed from the same material as the main body 122. In other examples, the cutting edges 130a, 130b can be formed from a material different from that used to construct the main body 122. In some examples, the cutting edges 130a, 130b can be formed from a single cutting insert or a plurality of cutting inserts. Such inserts can include, but not be limited to, a carbide insert.

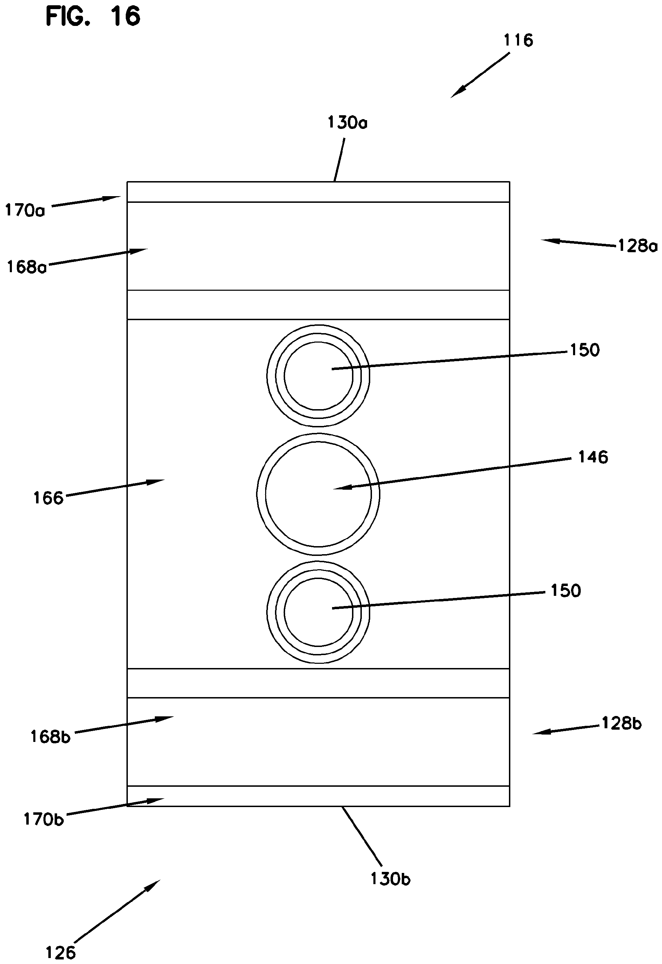

FIG. 16 shows a rear view of the reducing element 116 from the trailing face 126. The trailing face 126 (i.e., a rear face or side) includes a plurality of surfaces including a mounting face 166, a first body surface 168a, a second body surface 168b, a first relief surface 170a and a second relief surface 170b. The first body surface 168a is between and angled with the first relief surface 170a and the mounting face 166, and the second body surface 168b is between and angled with the second relief surface 170b and the mounting face 166.

As shown, the first relief surface 170a helps to define the cutting edge 130a and the second relief surface 170b helps to define the cutting edge 130b. In some examples, the first and second relief surfaces 170a, 170b are configured to be grinded down to sharpen the cutting edges 130a, 130b.

The first and second body surfaces 168a, 168b are configured to be in contact with the ledge 154 of the reducing element mount 118 when the corresponding cutting edge 130a, 130b is not the live edge.

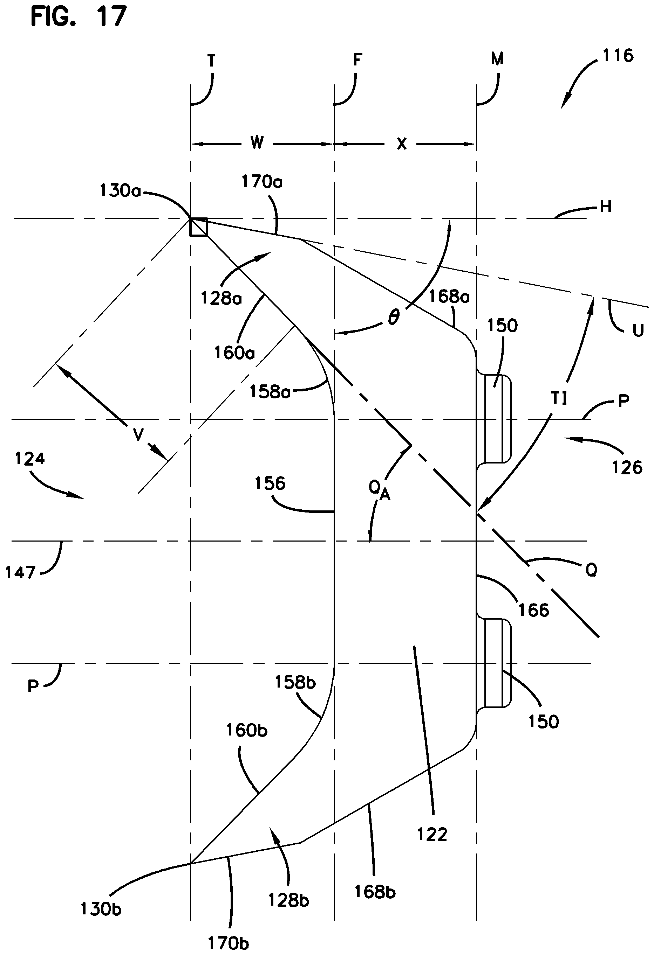

FIG. 17 shows a side view of the reducing element 116. Because cutting heads 128a, 128b are substantially similar, only a set of references and relationships between components of the cutting head 128a are shown. It will be understood that the references and relationships between components at cutting head 128b are substantially similar those at cutting head 128a. A reference plane T is defined by both cutting edges 130a, 130b. A reference plane F (i.e. a front face reference plane) is defined by the central surface 156 of the leading face 124. In some examples, the reference plane F is defined generally by central surface 156 of the leading face 124 and is positioned parallel to the reference plane T. A reference plane H is positioned perpendicular to reference plane T.

Reference plane H and reference plane F intersect at an angle θ. In some examples, the angle θ is generally 90 degrees.

A reference plane Q is shown to be defined by the rake surface 160a, and a reference plane U is shown to be defined by the relief surface 170a. Reference plane Q and reference plane U intersect at angle TI. In some examples, angle TI is between about 25 degrees and 40 degrees. In some examples, angle TI is between about 60 degrees and 90 degrees. In some examples, the angle TI is about 35 degrees. In some examples, the angle TI is about 70 degrees. In some examples, Q intersects with the central axis 147 of the fastener opening 146. In some examples, Q intersects with the central axis 147 at an angle QA. In some examples, QA is less than 50 degrees. In some examples, angle QA is about 46 degrees.

The rake surface 160a is shown to have a length V. In some examples, the length V is between about 0.5 inches and 1.2 inches. In other examples, the length V is between about 0.9 inches and 1.1 inches. In other examples still, the length V is about 1.07 inches.

The cutting heads 128a, 128b each extend from the main body 122. As shown, a distance W is between the reference plane T, which passes through each cutting edge 130a, 130b, and the reference plane F that is defined by the central surface 156. In some examples, the distance W is between about .80 inches and about 1.2 inches. In some examples, the distance W is about 1.03 inches.

A thickness X of the main body 122 is shown to be defined between the plane F defined by the central surface 156 of the leading face 124 and a plane M defined by the mounting face 166 of the trailing face 126. In some examples, the thickness X is between about 0.8 inches and about 1.2 inches. In other examples, the thickness X is between about 0.9 inches and 1.1 inches. In other examples still, the thickness X is about 1.01 inches.

The projections 150 each include a central axis P. In some examples, the central axes P are generally perpendicular to plane F defined by the central surface 156. In some examples, the central axes P are generally perpendicular to plane M defined by the mounting face 166. As shown, plane Q intersects the mounting face 166 at a point between the projections 150, and thereby between the central axes P.

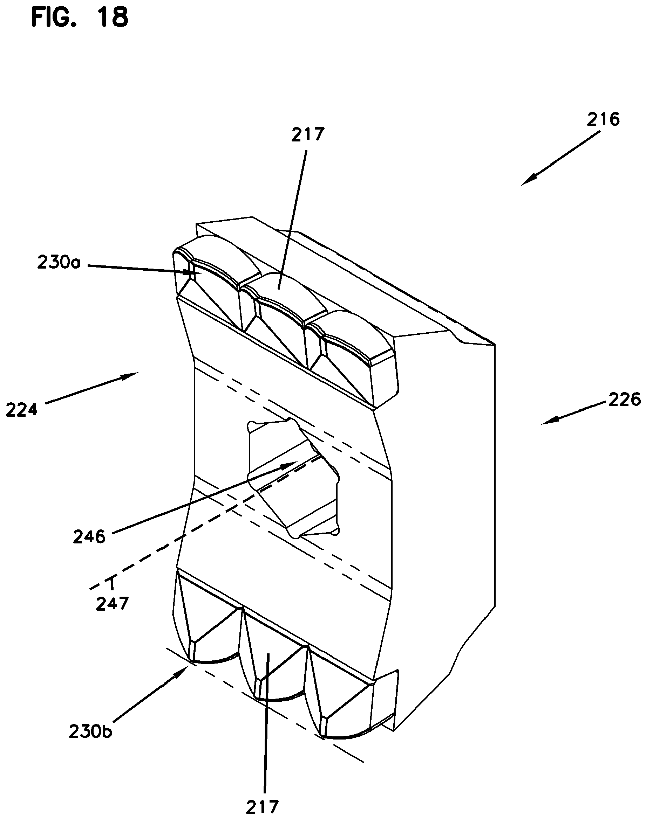

FIG. 18 shows a perspective view of a reversible reducing element 216 according to one embodiment of the present disclosure. The reducing element is substantially similar to the reducing element 116 described above. In some examples, the reducing element 216 is at least partially ornamental in nature and features nonfunctional elements. The reducing element 216 has a leading face 224, a trailing face 226, a first cutting edge 230a, a second cutting edge 230b, and a fastener opening 246. The fastener opening 246 has a central axis 247. The reducing element 216 includes a tip insert 217. In some examples, the reducing element 216 can include a plurality of inserts 217. In some examples, the insert 217 can be a carbide insert. As shown, the tip inserts 217 define the cutting edges 230a, 230b.

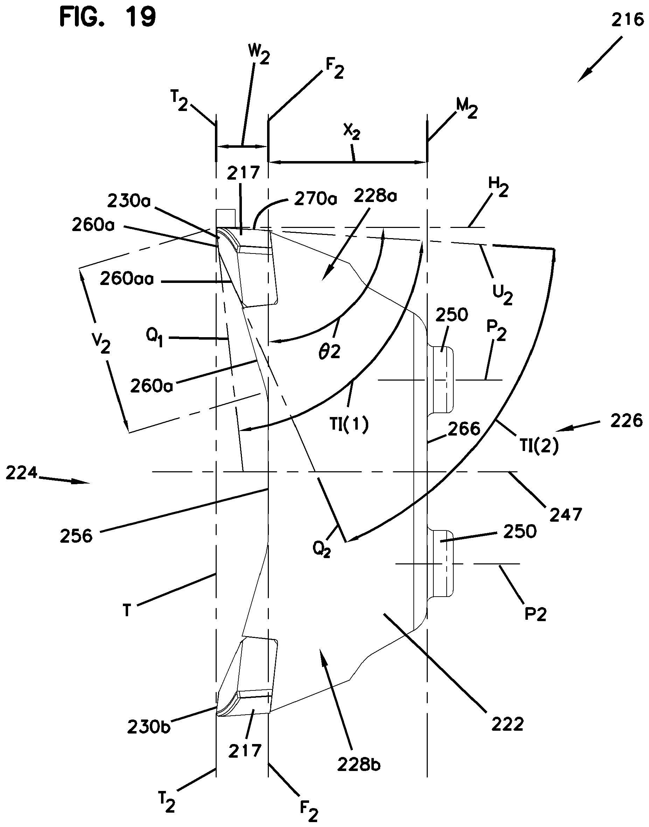

FIG. 19 shows a side view of the reducing element 216. Like the reducing element above, because cutting heads 228a, 228b are substantially similar, only a set of references and relationships between components of the cutting head 228a are shown. A reference plane T2 is defined by both cutting edges 230a, 230b. A reference plane F2 (i.e. a front face reference plane) is defined by a central (i.e. main) surface 256 of the leading face 224. In some examples, the reference plane F2 is defined generally by central surface 256 of the leading face 224 and is positioned parallel to the reference plane T2. In some examples, the reference plane H2 is positioned perpendicular to reference plane T2. The central surface 256 can have a variety of different shapes and configurations. In some examples, the central surface 256 is planer. In other examples, the central surface 256 can have an assortment of angles and shapes.

Reference plane H2 and reference plane F2 intersect at an angle θ2. In some examples, the angle θ2 is generally 90 degrees.

A reference plane Q1 is shown to be defined by a rake surface 260a. A reference plane Q2 is shown to be defined by a rake surface 260aa, and a reference plane U2 is shown to be defined by a relief surface 270a. Reference plane Q1 and reference plane U2 intersect at angle TI(1). Reference plane Q2 and reference plane U2 intersect at angle TI(2). In some examples, angle TI(1) is between about 60 degrees and 90 degrees. In some examples, angle TI(1) is about 80 degrees. In some examples, angle TI(2) is between about 50 degrees and 70 degrees. In some examples, angle TI(2) is about 63 degrees.

The rake surfaces 260a, 260aa combined have a length V2 to the central surface 256. In some examples, the length V2 is between about 1.0 inches and 2.0 inches. In some examples, the length V2 is about 1.6 inches.

The cutting heads 228a, 228b each extend from a main body 222. As shown, a distance W2 is between the reference plane T2, that passes through the leading most point of cutting edge 230a, 230b, and the reference plane F2 that is defined by the central surface 256. In some examples, the distance W2 is between about .25 inches and about 1.0 inches. In some examples, the distance W2 is about 0.5 inches.

A thickness X2 of the main body 222 is shown to be defined between the reference plane F2 defined by the central surface 256 of the leading face 224 and a plane M2 defined by a mounting face 266 of the trailing face 226. In some examples, the thickness X2 is between about 1.0 inches and about 2.0 inches. In other examples, the thickness X2 is about 1.5 inches.

Projections 250 each include a central axis P2. In some examples, the central axes P2 are generally perpendicular to reference plane F2 defined by the central surface 256. In some examples, the central axes P2 are generally perpendicular to plane M2 defined by the mounting face 266.

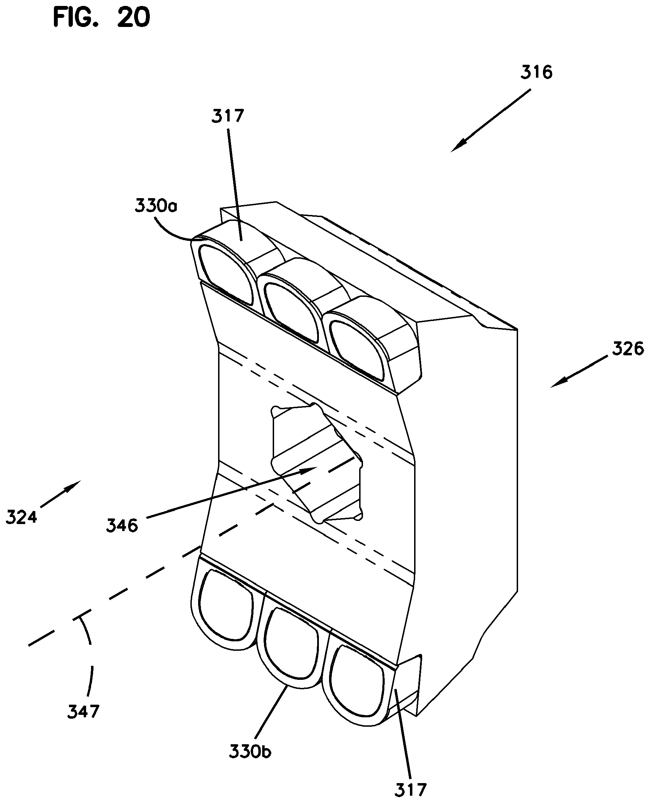

FIG. 20 shows a perspective view of a reversible reducing element 316 according to one embodiment of the present disclosure. The reducing element is substantially similar to the reducing elements 116, 216 described above. In some examples, the reducing element 316 is at least partially ornamental in nature and features nonfunctional elements. The reducing element 316 has a leading face 324, a trailing face 326, a first cutting edge 330a, a second cutting edge 330b, and a fastener opening 346. The fastener opening 346 has a central axis 347. The reducing element 316 includes a tip insert 317. In some examples, the reducing element 316 can include a plurality of inserts 317. In some examples, the insert 317 can be a carbide insert. As shown, the tip inserts 317 define the cutting edges 330a, 330b.

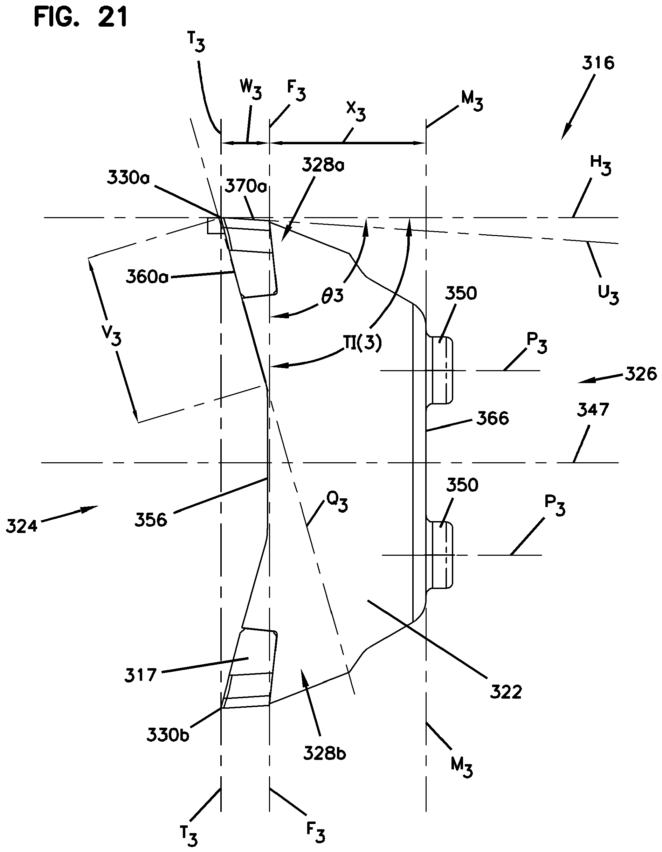

FIG. 21 shows a side view of the reducing element 316. A reference plane T3 is defined by both cutting edges 330a, 330b. A reference plane F2 is defined by a central (i.e. main) surface 356 of the leading face 324. In some examples, the reference plane F3 (i.e. a front face reference plane) is defined generally by central surface 356 of the leading face 324 and is positioned parallel to the reference plane T3. In the depicted example, a reference plane H3 is positioned perpendicular to reference plane T3. The central surface 356 can have a variety of different shapes and configuration. In some examples, the central surface 356 is planer. In other examples, the central surface 356 can have an assortment of angles and shapes.

Reference plane H3 and reference plane F3 intersect at an angle θ3. In some examples, the angle θ3 is generally 90 degrees.

A reference plane Q3 is shown to be defined by a rake surface 360a and a reference plane U3 is shown to be defined by a relief surface 370a. Reference plane Q3 and reference plane U3 intersect at angle TI(3). In some examples, angle TI(3) is between about 60 degrees and 90 degrees. In some examples, angle TI(3) is about 72 degrees.

The rake surface 360a has a length V3 to the central surface 356. In some examples, the length V3 is between about 1.0 inches and 2.0 inches. In some examples, the length V3 is about 1.6 inches.

Cutting heads 328a, 328b each extend from a main body 322. As shown, a distance W3 is between the reference plane T3, that passes through the leading most point of cutting edge 330a, 330b, and the reference plane F3 that is defined by the central surface 356. In some examples, the distance W3 is between about .25 inches and about 1.0 inches. In some examples, the distance W3 is about 0.45 inches.

A thickness X3 of the main body 322 is shown to be defined between the reference plane F3 defined by the central surface 356 of the leading face 324 and a plane M3 defined by a mounting face 366 of the trailing face 326. In some examples, the thickness X3 is between about 1.0 inches and about 2.0 inches. In other examples, the thickness X3 is about 1.5 inches.

Projections 350 each include a central axis P3. In some examples, the central axes P3 are generally perpendicular to reference plane F3 defined by the central surface 356. In some examples, the central axes P3 are generally perpendicular to plane M3 defined by the mounting face 266.

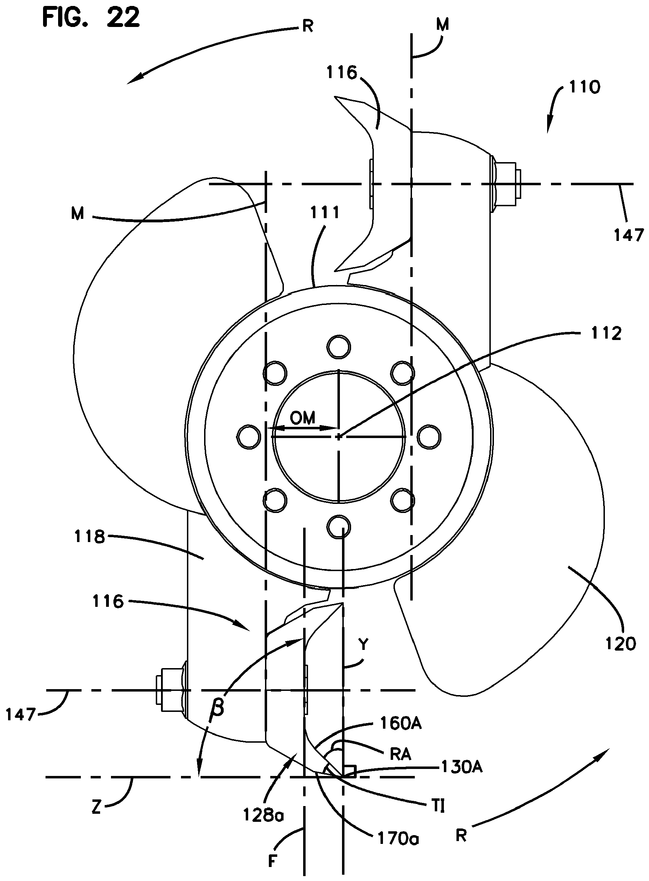

FIG. 22 shows the reducing element 116 mounted to the rotary reducing component 110 via the reducing element mount 118. A reference plane Y (i.e. a radial reference plane) intersects with leading most point in the rotation (i.e. reducing) direction R of cutting edge 130a and the central axis 112 of the rotary reducing component 110. A reference plane Z (i.e. a chip direction plane) is positioned perpendicular to reference plane Y. Reference plane Z intersects with reference plane F, which is defined by the central surface 156 of the leading face 124, at an angle β. In some examples, angle β is referred to as a chip curl angle. In some examples, angle β is between about 82 degrees and about 102 degrees when the reducing boundary D is equal or less than 26 inches. In other examples, the angle β is between about 79 degrees and about 97 degrees when the reducing boundary D is between about 26 inches and 56 inches. In other examples, the angle β is about 91 degrees regardless of diameter of the reducing diameter D. In some examples, the angle β is about 91 degrees when the reducing boundary D is less than or equal to about 56 inches.

A rake angle RA is defined between the first rake surface 160a and the reference plane Y. The rake angle RA, in one example, can be greater than or equal to 30 degrees. In some examples, the rake angle RA is about 42 degrees.

The mounting plane M is shown to be offset a distance OM from the central axis 112 in a direction opposite of that of the rotation direction R of the rotary reducing component 110 along the central axis 147 of the rotary reducing component 110. In some examples, the mounting plane M is offset a distance that is about 10% of the diameter of the rotary reducing component 110. In some examples, the distance OM that is equal to at least the thickness X of the reducing element (shown in FIG. 17). The mounting plane M is also shown to be offset from the reference plane Y in a direction opposite of that of the rotation direction R of the rotary reducing component 110.

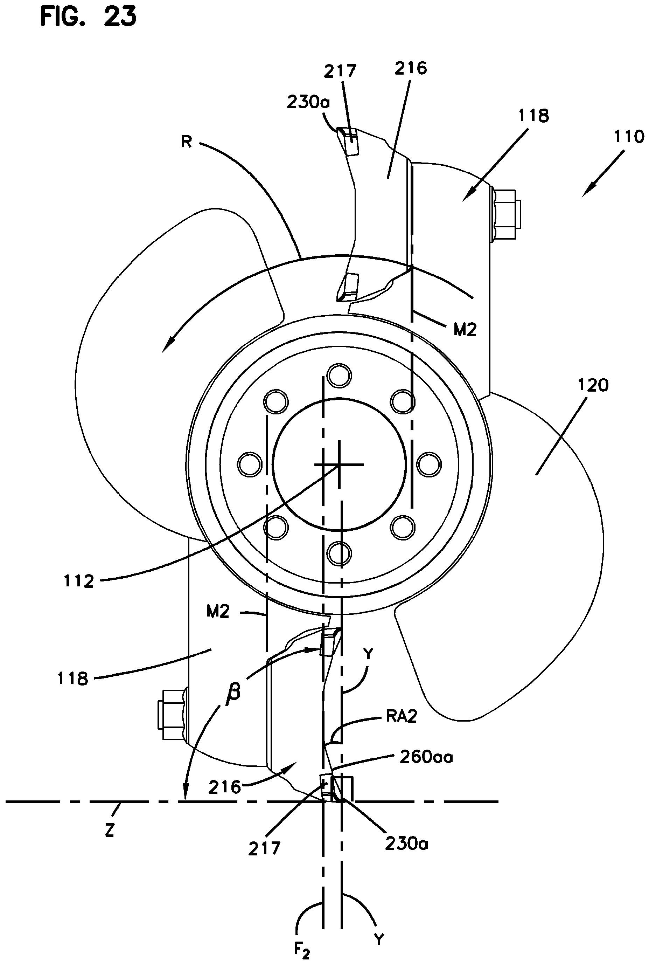

FIG.23 shows the reducing element 216 mounted to the rotary reducing component 110 via the reducing element mount 118. As shown, the reducing element 216 forms the angle β with reference plane Z and reference plane F2. As described above, in some examples, angle β is between about 82 degrees and about 102 degrees when the reducing boundary D is equal to or less than 26 inches. In other examples, the angle β is between about 79 degrees and about 97 degrees when the reducing boundary D is between about 26 inches and 56 inches. In other examples, the angle β is about 91 degrees regardless of diameter of the reducing diameter D. In some examples, the angle β is about 91 degrees when the reducing boundary D is less than or equal to about 56 inches.

A rake angle RA2 is defined between the first rake surface 260a and the reference plane Y. In some examples, the rake angle RA2 is between about 0 degrees and 20 degrees. In one example, the rake angle RA2 is about 5 degrees. In other examples, the rake angle RA2 is about 14 degrees.

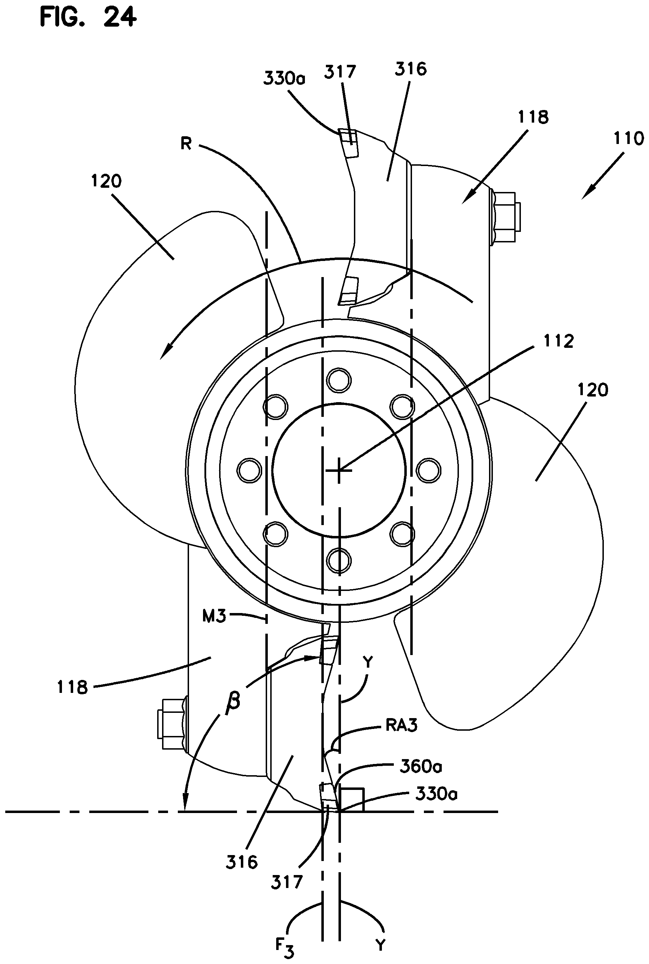

FIG. 24 shows the reducing element 316 mounted to the rotary reducing component 110 via the reducing element mount 118. As shown, the reducing element 316 forms the angle β with reference plane Z and reference plane F3. As described above, in some examples, angle β is between about 82 degrees and about 102 degrees when the reducing boundary D is equal to or less than 26 inches. In other examples, the angle β is between about 79 degrees and about 97 degrees when the reducing boundary D is between about 26 inches and 56 inches. In other examples, the angle β is about 91 degrees regardless of diameter of the reducing diameter D. In some examples, the angle β is about 91 degrees when the reducing boundary D is less than or equal to about 56 inches.

A rake angle RA3 is defined between the first rake surface 360a and the reference plane Y. In some examples, the rake angle RA3 is between about 0 degrees and 20 degrees. In one example, the rake angle RA3 is about 5 degrees. In other examples, the rake angle RA3 is about 14 degrees.

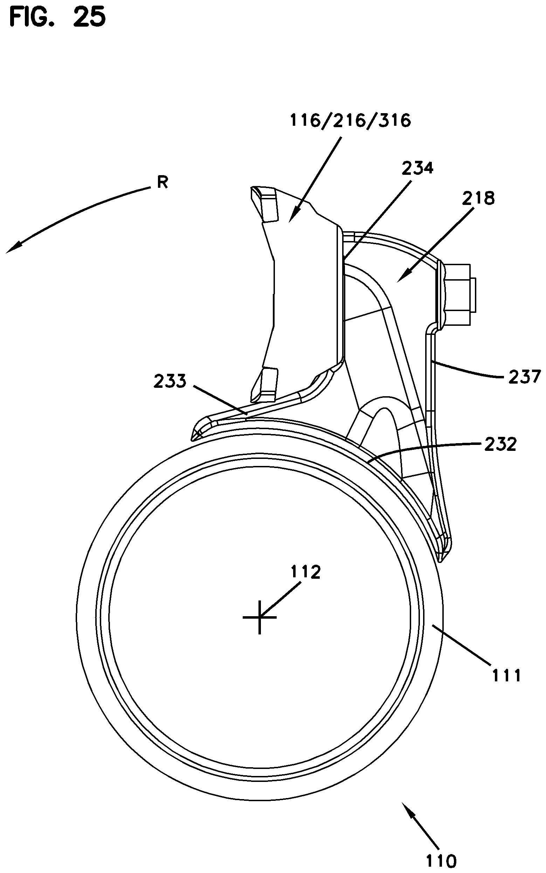

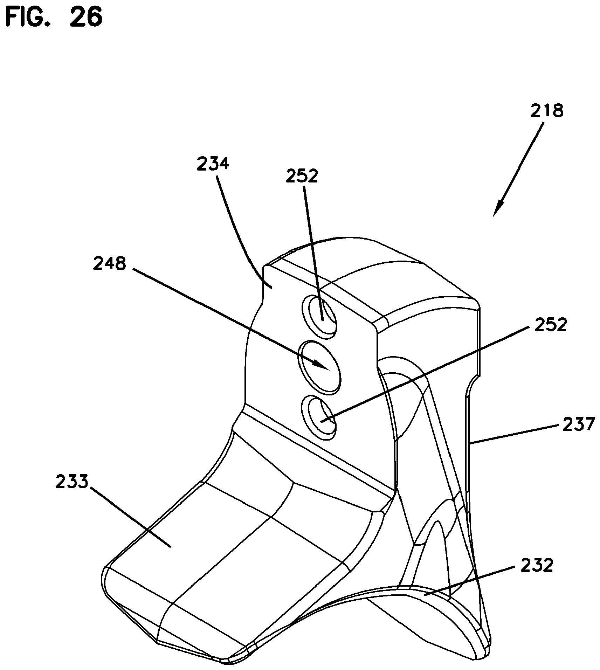

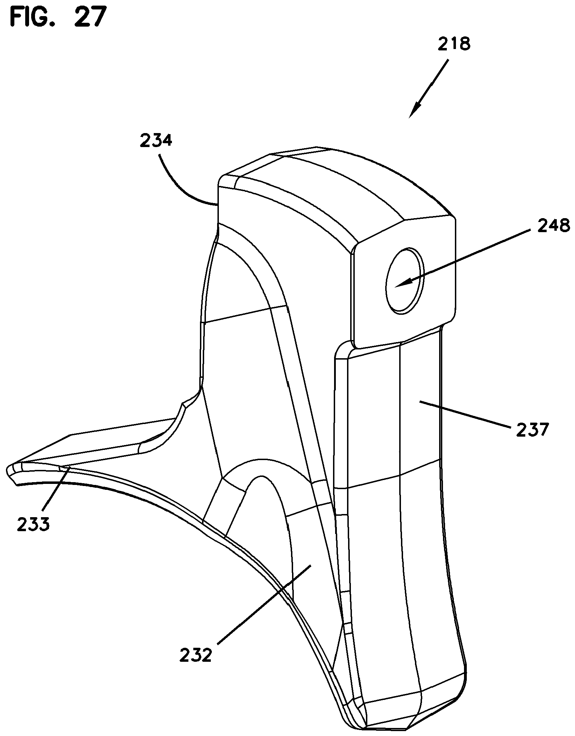

FIGS. 25-27 show a reducing element mount 218 according to one embodiment of the present disclosure. The reducing element mount 218 is substantially similar to the reducing element mount 118 described above. In some examples, the reducing element mount 218 can be forged. Further, the reducing element mount 218 is configured to receive any of the reducing elements 116, 216, 316 described above. Further, as shown in FIG. 25, the reducing element mount 218 is configured to be coupled with the main body 111 of the rotary reducing component 110 at a base 232 and coupled with a reducing element 116, 216, 316 at a reducing element mount leading face 234 via the fastener 136 (shown in FIG. 9). Each reducing element mount 218 extends radially away from the main body 111 so that the reducing element mount leading face 234 faces in the direction of the rotation R.

In the depicted example, the base 232 includes a portion 233 that extends in front of the reducing element 116, 216, 316 in the direction of rotation R when the reducing element mount 218 and reducing element 116, 216, 316 are mounted to the main body 111. In some examples, the portion 233 can include a ramped shape extending opposite the direction of rotation to the leading face 234, being angled away from the main body 111. In some examples, the portion 233 can be configured to support and contact a portion of the reducing element 116, 216, 316.

Like the reducing element mount 118 described above, the reducing element mount 218 includes a fastener opening 248 that is configured to receive the bolt 142 of the fastener 136. The fastener opening 248 extends through the reducing element mount leading face 234 to a trailing face 237.

The reducing element mount 218 can also include a pair of recesses 252 disposed within the reducing element mount leading face 234 of the reducing element mount 218. In some examples, the recesses 252 are generally cylindrical in shape; however, they can be a variety of different shapes. In some examples, the recesses 252 are tapered.

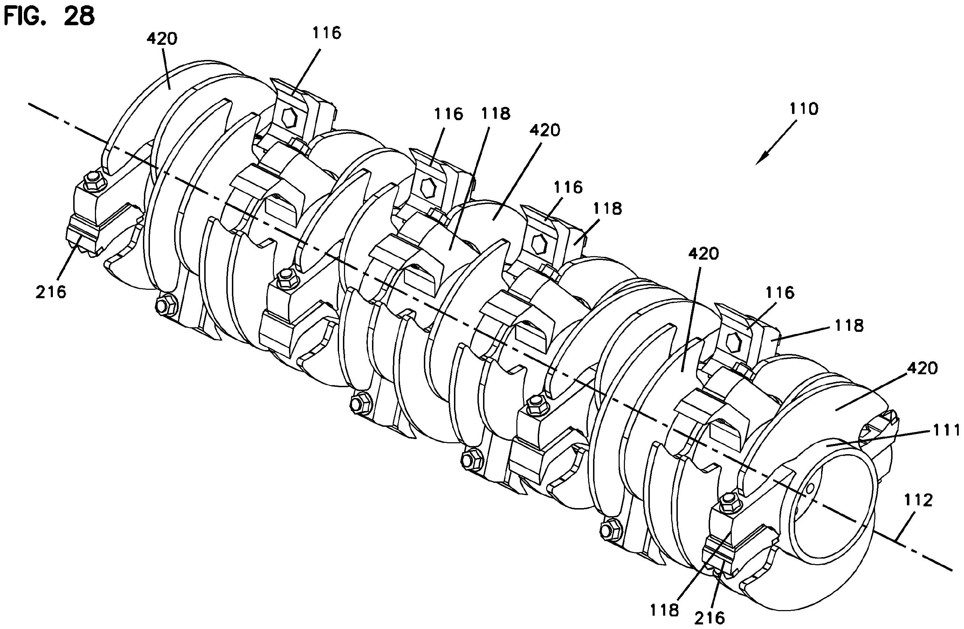

FIG. 28 shows another perspective view of the rotary reducing component 110. Like in FIG. 4 above, the reducing elements 116 are mounted to the reducing element mounts 118 that are mounted to a main body 111. Like above, the depicted rotary reducing component 110 includes 24 reducing elements 116 spaced along the length of the main body 111 of the rotatory reducing component 110. The rotary reducing component 110 includes a plurality of depth control devices 420 that are configured to both aid in preventing the rotary reducing component from becoming jammed during operation and to aid in controlling the size of a material chip created by the reducing elements 116 during operation by limiting their depth of cut during operation. While reducing elements 116 are shown and used in the following description, reducing elements 216, 316 and a variety of other different types of reducing elements can be utilized with the depth control devices 420.

Each depth control device 420 is paired with a reducing element 116. Specifically, each depth control device 420 is mounted to the main body 111 of the rotary reducing component 110 circumferentially adjacent each reducing element 116 and reducing element mount 118 so that, during rotation of the rotary reducing component 110, the depth control device 420 passes by a point prior to the reducing element 116 and the reducing element mount 118. In some examples, each depth control device 420 can be plate-like. In other examples, each depth control device 420 can include a plurality of individual components.

In some examples, each depth control devices 420 can be one of a plurality of different types and shapes. For example, each depth control devices 420 can have one of a plurality of three different types to maximize the performance of the rotary reducing component 110. In some examples, the depth control devices 420 can be configured to have a minimal radial height at portions of the depth control devices 420 that are immediately axially adjacent reducing elements 116 of which the respective depth control device 420 is not circumferentially adjacent.

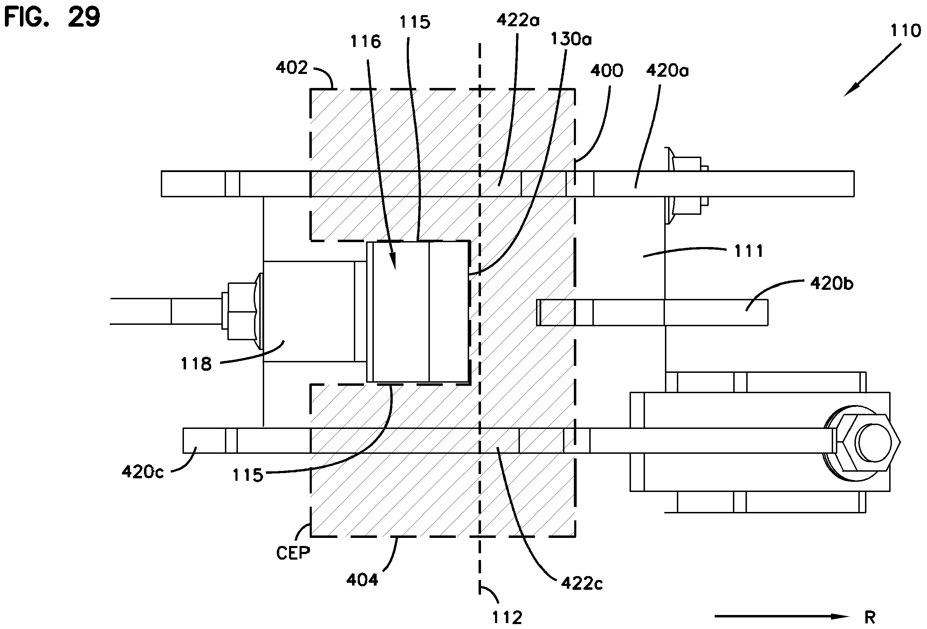

FIG. 29 shows a schematic view of an example arrangement of the depth control devices 420 on the main body 111 of the rotary reducing component 110 surrounding a single reducing element 116. FIG. 29 is meant to be schematic and illustrative of the arrangement around a single reducing element 116. As shown, a depth control device 420b is circumferentially aligned with the reducing element 116. In some examples, the depth control device 420b can be centered with the reducing element 116. Further, depth control devices 420a, 420c are shown positioned axially adjacent on the main body 111 from the reducing element 116. Specifically, the reducing element 116 and the associated depth control device 420b are shown positioned between the depth control devices 420a, 420b.

A chip evacuation pocket CEP is schematically shown with dashed lines surrounding the reducing element 116. The chip evacuation pocket CEP is a pocket in which the chips move away from the reducing element 116 during operation of the rotary reducing component 110. The chips are formed from material which the reducing element 116 contacts (i.e., reduces). To ease chip evacuation away from the reducing element 116, it is advantageous to have a chip evacuation pocket as large and as open as possible. However, it is also imperative to maintain depth control so that the reducing element 116 can function optimally and in a protected manner.

In the depicted example, the chip evacuation pocket CEP is generally U-shaped. Specifically, the chip evacuation pocket CEP has a leading most boundary 400 in the rotation direction R that is defined by at least the depth control device 420b. Side boundaries 402 and 404 extend past the depth control devices 420a, 420c in opposite axial directions from sides 115 of the reducing element 116. In some examples, the depth control devices 420a, 420b have configurations in which pocket portions 422a, 422c of the depth control devices 420a, 420c that correspond with the side boundaries 402, 404 of the chip evacuation pocket CEP and have radial heights that are substantially reduced radial heights to allow for proper chip movement away from the reducing element 116. In some examples, all reducing elements 116 positioned on the main body 111 of the rotary reducing component 110 have a similar chip evacuation pocket CEP as shown in FIG. 29. In some examples, the reducing elements 116 that are positioned immediately adjacent the ends of the main body 111 have at least a portion of the chip evacuation pocket CEP associated with them. The chip evacuation pocket also extends radially away from the main body 111 to the cutting edge 130a.

On the complete rotary reducing component 110, the depth control devices 420a, 420c also each circumferentially align with reducing elements 116 positioned on the main body 111. Therefore, successive axially adjacent depth control devices 420 are each circumferentially aligned with a reducing element 116 while also providing pocket portions 422 that are axially adjacent successive axially adjacent reducing elements 116. Such an arrangement maximizes the size of the chip evacuation pocket CEP and provides depth control.

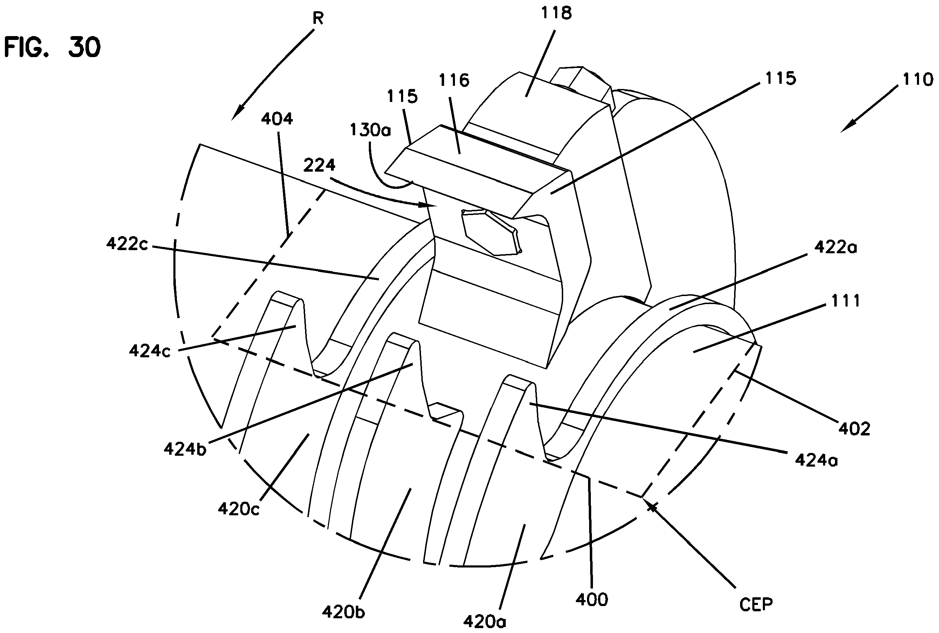

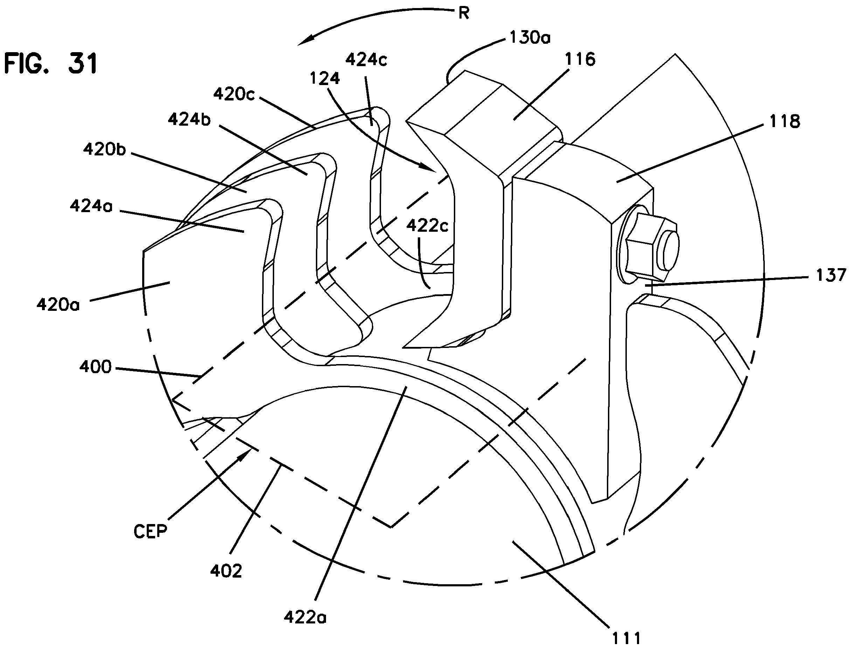

FIG. 30 shows a front perspective view of a first example of the arrangement shown in FIG. 29. FIG. 31 shows a rear perspective view of the first example of the arrangement shown in FIG. 29. As shown, the depth control devices 420a, 420c are axially spaced along the main body 111 from the sides 115 of the reducing element 116 and the depth control device 420b. Further, the pocket portions 422a, 422c of the depth control devices 420a, 420c are shown to have a radial heights from the main body 111 that are substantially less than a radial height of the reducing element 116.

In the first example shown in FIGS. 30 and 31, the leading most boundary 400 of the chip evacuation pocket CEP is defined by depth extensions 424a, 424b, 424c of the depth control devices 420a, 420b, 420c. In some examples, the depth extensions 424a, 424b, 424c have radial heights from the main body 111 greater than the pocket portions 422a, 422c. In some examples, the depth extensions 424a, 424b, 424c have radial heights equal to or greater than half the radial height of the reducing element 116. The depth extensions 424a, 424b, 424c can aid in protecting the reducing element 116 and aid in reducing the depth of cut by the cutting edge 130a of the reducing element 116. In some examples, the depth extensions 424a, 424b, 424c can have hook-like configurations and be circumferentially spaced from the leading face 124 of the reducing element 116. In some examples, the depth extensions 424a, 424b, 424c have equal radial heights. In other examples, the depth extensions 424a, 424b, 424c have varying radial heights.

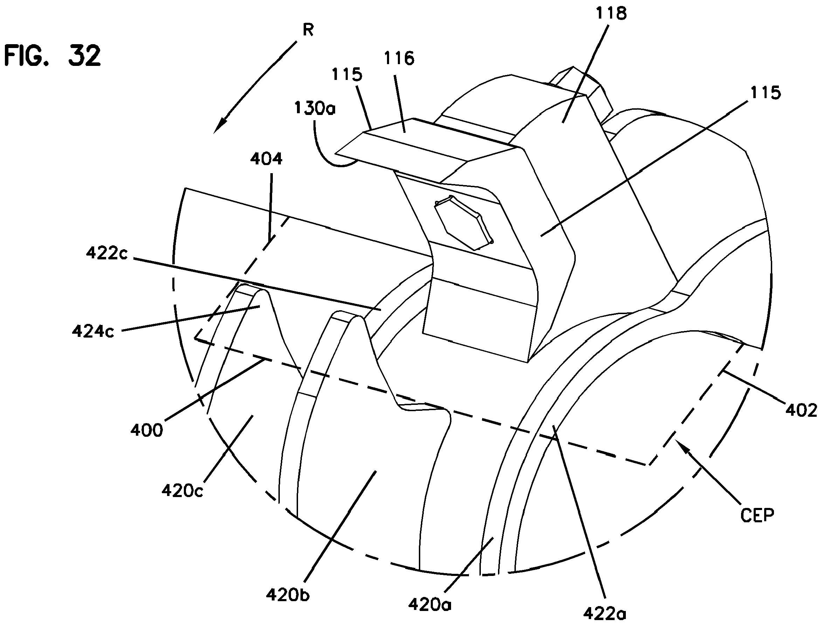

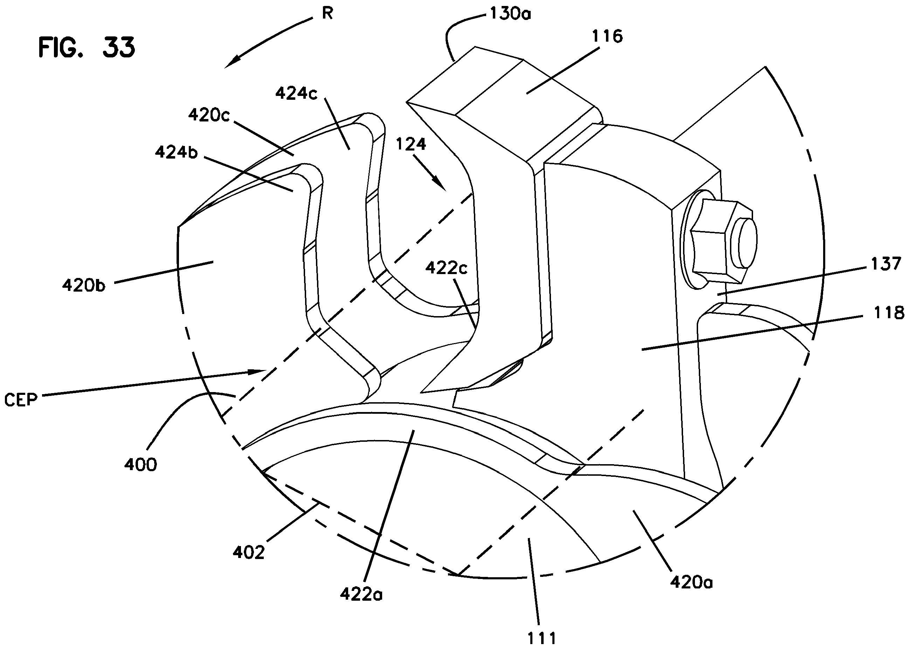

FIG. 32 shows a front perspective view of a second example of the arrangement shown in FIG. 29. FIG. 33 shows a rear perspective view of the second example of the arrangement shown in FIG. 29. What differs from the first example is that, in the second example shown in FIGS. 32 and 33, the leading most boundary 400 of the chip evacuation pocket CEP is defined by depth extensions 424a, 424b of the depth control devices 420a, 420b. As shown, the pocket portion 422c of the depth control device 420c is positioned axially adjacent the depth extensions 424a, 424b. Alternatively, the leading most boundary 400 of the chip evacuation pocket CEP can be defined by depth extensions 424b, 424c of the depth control devices 420b, 420c, and the pocket portion 422a of the depth control device 420a is positioned axially adjacent the depth extensions 424b, 424c.

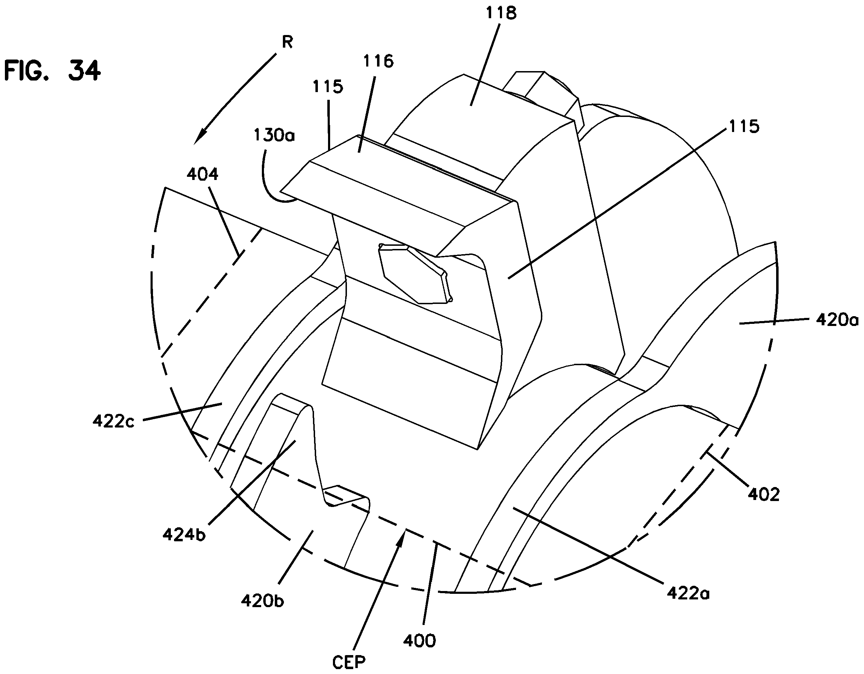

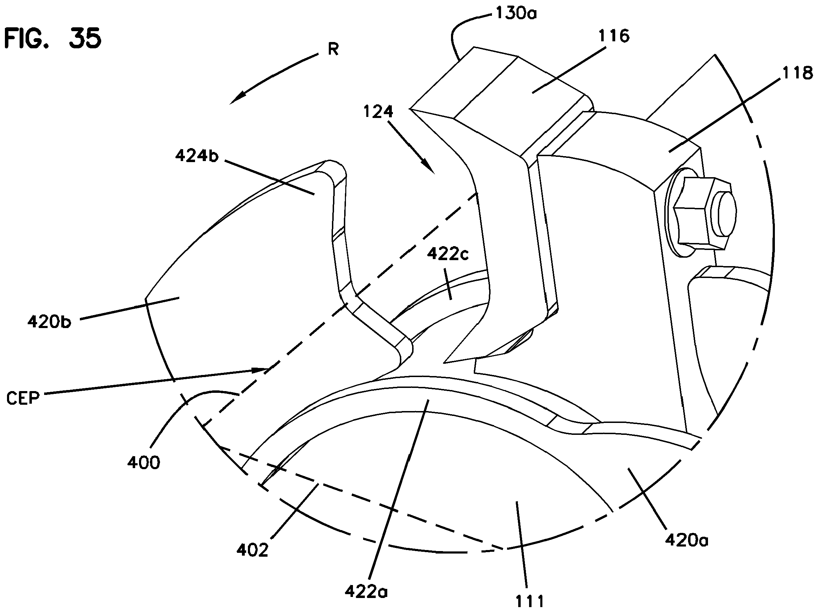

FIG. 34 shows a front perspective view of a third example of the arrangement shown in FIG. 29. FIG. 35 shows a rear perspective view of the third example of the arrangement shown in FIG. 29. What differs from the first and second examples is that, in the third example shown in FIGS. 34 and 35, the leading most boundary 400 of the chip evacuation pocket CEP is defined only by the depth extension 424b of the depth control device 420b. As shown, the pocket portions 422a, 422c of the depth control devices 420a, 420c are positioned axially adjacent the depth extension 424b.

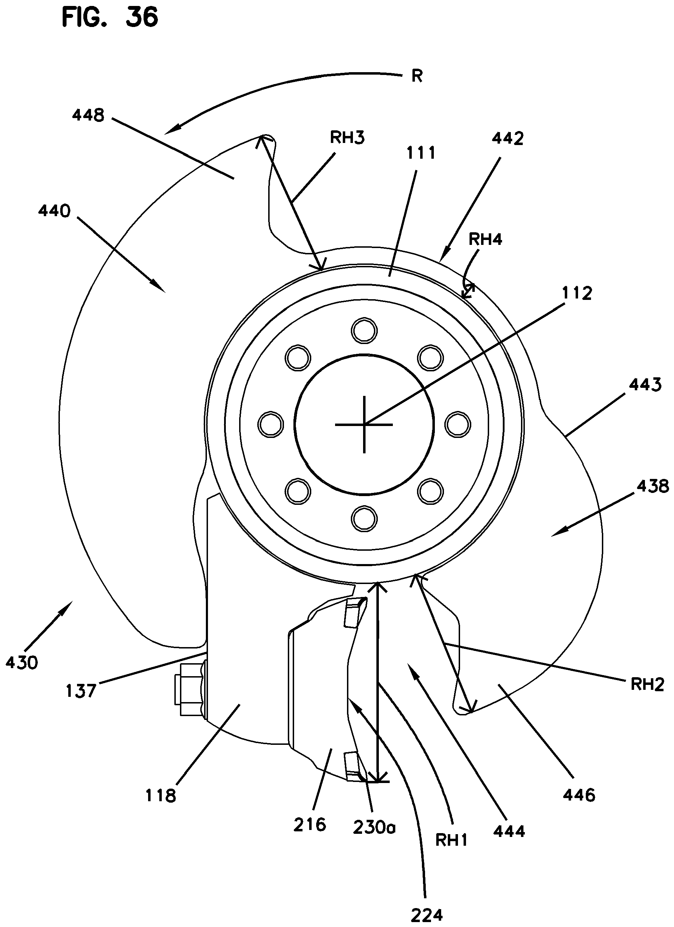

FIGS. 36-38 show side views of example depth control devices 430, 432, 434. The depth control devices 430, 432, 434 can be disposed on the main body 111 in a variety of different orders and patterns. Specifically, the depth control devices 430, 432, 434 can be used as depth control devices 420a, 420b, and 420c in a variety of different orders, depending on the position of the reducing elements on the main body 111 of the rotary reducing component 110. In the example shown in FIGS. 30-35, the depth control device 430 corresponds with depth control device 420a, the depth control device 432 corresponds with depth control device 420b, and the depth control device 434 corresponds with depth control device 420c.

FIG. 36 shows the depth control device 430 positioned circumferentially adjacent an example reducing element 216. Reducing elements 116 and 316 can also be used. The reducing element 216 has a radial height of RH1 from the main body 111. The depth control device 430 includes a leading depth control portion 438, a trailing depth control portion 440, a pocket portion 442 between the leading and trailing depth control portions 438, 440, and a reducing element gap 444 between the leading and trailing depth control portions 438, 440.

The leading depth control portion 438 is positioned in front of the reducing element 216 in the direction of rotation R. The leading depth control portion 438 includes a depth extension 446 that has a radial height RH2 from the main body 111. In some examples, the leading depth control portion 438 has a consistent radial height. In other examples, the leading depth control portion 438 has a decreasing height in the direction of rotation R. In other examples, the leading depth control portion 438 has an increasing height in the direction of rotation R

The trailing depth control portion 440 is positioned behind the reducing element 216 in a direction opposite the direction of rotation R. The trailing depth control portion 440 includes a depth extension 448 that has a radial height RH3 from the main body 111. In some examples, the trailing depth control portion 440 has a consistent radial height. In other examples, the trailing depth control portion 440 has a decreasing height in the direction of rotation R. In other examples, the trailing depth control portion 440 has an increasing height in the direction of rotation R.

The pocket portion 442 is positioned between the leading depth control portion 438 and the trailing depth control portion 440. In some examples, the pocket portion 442 has a radial height RH4 from the main body 111. In some examples, the depth control device 430 is constructed of only the leading and trailing depth control portions 438, 440. When installed on the main body 111, the leading and trailing depth control portions 438, 440 can be circumferentially spaced from one another to create the pocket 442; therefore, in such an example, the radial height RH4 of the pocket portion 442 would be equal to 0. In some examples, the depth control device 430 can have a leading ramped surface 443 between the leading depth control portion 438 and the pocket 442. In some examples the pocket portion 442 corresponds with the at least one of the pocket portions 422a, 422b shown in FIGS. 30-35

The reducing element gap 444 is a gap defined by the depth control device 430 so as to accommodate the reducing element 216 and the reducing element mount 218. In some examples, the trailing depth control portion 440 can be positioned in contact with the trailing face 237 of the reducing element mount 218. In some examples, the leading depth control portion 438, specifically the depth extension 446, can be circumferentially spaced in the direction of rotation R from the leading face 224 of the reducing element 216.

In some examples, the radial heights RH2 and RH3 of the depth extensions 446,448 are equal to or greater than 50 percent of the radial height RH1 of the reducing element 216. In some examples, the radial heights RH5 and RH6 of the depth extensions 458, 460 are equal to or greater than 75 percent of the radial height RH1 of the reducing element 216. In some examples, the radial height RH4 of the pocket portion 442 is equal to or less than 25 percent of the radial height RH1 of the reducing element 216. In some examples, the radial height RH4 is equal to or less than 15 percent of the radial height RH1 of the reducing element 216. In some examples, the radial height RH4 is equal to or less than 10 percent of the radial height RH1 of the reducing element 216.

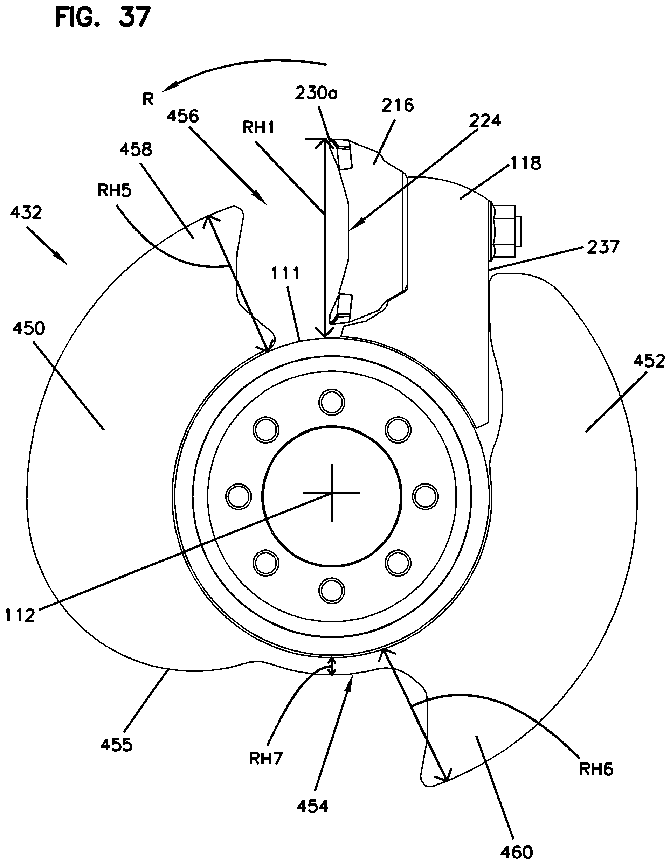

FIG. 37 shown the depth control device 432 positioned circumferentially adjacent an example reducing element 216. Reducing elements 116 and 316 can also be used. As described above, the reducing element 216 has the radial height of RH1 from the main body 111. Like the depth control device 430, the depth control device 432 includes a leading depth control portion 450, a trailing depth control portion 452, a pocket portion 454 between the leading and trailing depth control portions 450, 452, and a reducing element gap 456 between the leading and trailing depth control portions 450, 452.

While similar to the depth control device 430, the leading depth control portion 450 extends a greater distance along the circumference of the main body 111 as compared to the leading depth control portion 438 of the depth control device 430. The leading depth control portion 450 is positioned in front of the reducing element 216 in the direction of rotation R. The leading depth control portion 450 includes a depth extension 458 that has a radial height RH5 from the main body 111. In some examples, the leading depth control portion 450 has a consistent radial height. In other examples, the leading depth control portion 450 has a decreasing height in the direction of rotation R. In other examples, the leading depth control portion 450 has an increasing height in the direction of rotation R

The trailing depth control portion 452 is positioned behind the reducing element 216 in a direction opposite the direction of rotation R. The trailing depth control portion 452 includes a depth extension 460 that has a radial height RH6 from the main body 111. In some examples, the trailing depth control portion 452 is substantially similar to the trailing depth control portion 440 of the depth control device 430. In some examples, the trailing depth control portion 452 has a consistent radial height. In other examples, the trailing depth control portion 452 has a decreasing height in the direction of rotation R. In other examples, the trailing depth control portion 452 has an increasing height in the direction of rotation R.

The pocket portion 454 is positioned between the leading depth control portion 450 and the trailing depth control portion 452. In some examples, the pocket portion 454 has a radial height RH7 from the main body 111. In some examples, the depth control device 432 is constructed of only the leading and trailing depth control portions 450, 452. When installed on the main body 111, the leading and trailing depth control portions 450, 452 can be circumferentially spaced from one another to create the pocket 454; therefore, in such an example, the radial height RH7 of the pocket portion 442 would be equal to 0. In some examples, the depth control device 432 can have a leading ramped surface 455 between the leading depth control portion 450 and the pocket 454. As noted above, because the leading depth control portion 450 extends a greater distance along the circumference of the main body 111 as compared to the leading depth control portion 438 of the depth control device 430, the pocket 454 extends a lesser distance along the circumference of the main body 111 as compared to the pocket portion 442 of the depth control device 430. In some examples the pocket portion 454 corresponds with the at least one of the pocket portions 422a, 422b shown in FIGS. 30-35.

The reducing element gap 456 is a gap defined by the depth control device 432 so as to accommodate the reducing element 216 and the reducing element mount 218. The reducing element gap 456 is substantially similar to the reducing element gap 444 of the depth control device 430 described above. In some examples, the trailing depth control portion 452 can be positioned in contact with the trailing face 237 of the reducing element mount 218. In some examples, the leading depth control portion 450, specifically the depth extension 458, can be circumferentially spaced in the direction of rotation R from the leading face 224 of the reducing element 216.

In some examples, the radial heights RH5 and RH6 of the depth extensions 458, 460 are equal to or greater than 50 percent of the radial height RH1 of the reducing element 216. In some examples, the radial heights RH5 and RH6 of the depth extensions 458, 460 are equal to or greater than 75 percent of the radial height RH1 of the reducing element 216. In some examples, the radial height RH7 of the pocket portion 454 is equal to or less than 25 percent of the radial height RH1 of the reducing element 216. In some examples, the radial height RH7 is equal to or less than 15 percent of the radial height RH1 of the reducing element 216. In some examples, the radial height RH7 is equal to or less than 10 percent of the radial height RH1 of the reducing element 216.

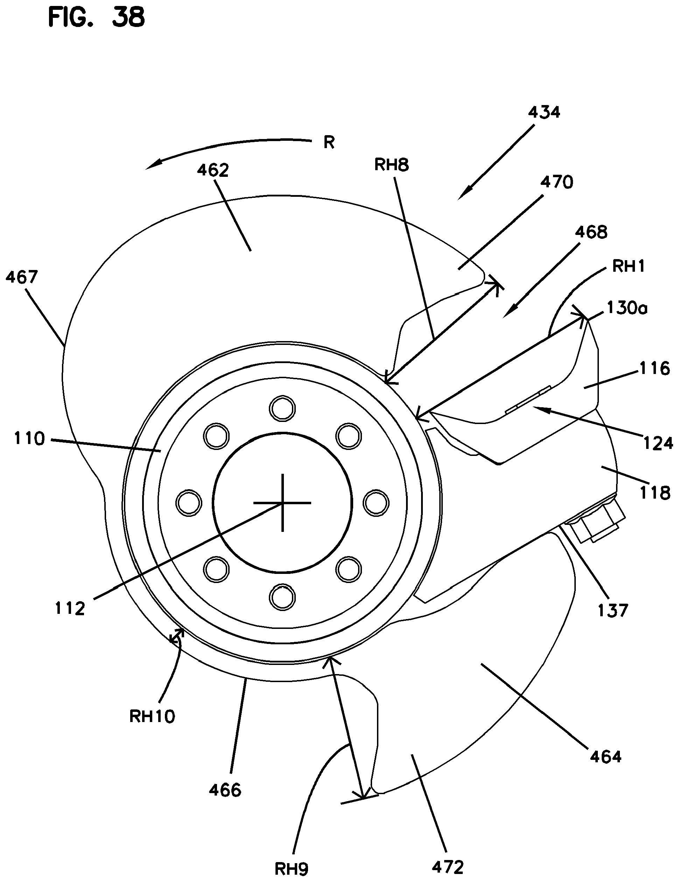

FIG. 38 shows the depth control device 434 positioned circumferentially adjacent an example reducing element 116. Reducing elements 216 and 316 can also be used. As described above, the reducing element 116 has the radial height of RH1 from the main body 111. Like the depth control devices 430, 432, the depth control device 434 includes a leading depth control portion 462, a trailing depth control portion 464, a pocket portion 466 between the leading and trailing depth control portions 462, 464, and a reducing element gap 468 between the leading and trailing depth control portions 462, 464.

While similar to the depth control devices 430, 432, the leading depth control portion 462 extends a greater distance along the circumference of the main body 111 as compared to the leading depth control portion 438 of the depth control device 430 but a lesser circumferential distance than the leading depth control portion 450 of the depth control device 432. The leading depth control portion 462 is positioned in front of the reducing element 116 in the direction of rotation R. The leading depth control portion 462 includes a depth extension 470 that has a radial height RH8 from the main body 111. In some examples, the leading depth control portion 462 has a consistent radial height. In other examples, the leading depth control portion 462 has a decreasing height in the direction of rotation R. In other examples, the leading depth control portion 462 has an increasing height in the direction of rotation R.

The trailing depth control portion 464 is positioned behind the reducing element 116 in a direction opposite the direction of rotation R. The trailing depth control portion 464 includes a depth extension 472 that has a radial height RH9 from the main body 111. In some examples, the trailing depth control portion 452 extends a lesser distance along the circumference of the main body 111 as compared to the trailing depth control portion 440 of the depth control device 430 and the trailing depth control portion 452 of the depth control device 432. In some examples, the trailing depth control portion 464 has a consistent radial height. In other examples, the trailing depth control portion 464 has a decreasing height in the direction of rotation R. In other examples, the trailing depth control portion 464 has an increasing height in the direction of rotation R.

The pocket portion 466 is positioned between the leading depth control portion 462 and the trailing depth control portion 464. In some examples, the pocket portion 466 has a radial height RH10 from the main body 111. In some examples, the depth control device 434 is constructed of only the leading and trailing depth control portions 462, 464. When installed on the main body 111, the leading and trailing depth control portions 462, 464, can be circumferentially spaced from one another to create the pocket 466; therefore, in such an example, the radial height RH10 of the pocket portion 466 would be equal to 0. In some examples, the depth control device 434 can have a leading ramped surface 467 between the leading depth control portion 462 and the pocket 466. As noted above, because the leading depth control portion 462 extends a greater distance along the circumference of the main body 111 as compared to the leading depth control portion 438 of the depth control device 430, the pocket 466 extends a lesser distance along the circumference of the main body 111 as compared to the pocket portion 442 of the depth control device 430. In some examples the pocket portion 466 corresponds with the at least one of the pocket portions 422a, 422b shown in FIGS. 30-35.

The reducing element gap 468 is a gap defined by the depth control device 434 so as to accommodate the reducing element 116 and the reducing element mount 118. The reducing element gap 456 is substantially similar to the reducing element gaps 444, 456 of the depth control devices 430, 432 described above. In some examples, the trailing depth control portion 464 can be positioned in contact with the trailing face 137 of the rotary reducing element mount 118. In some examples, the leading depth control portion 462, specifically the depth extension 470, can be circumferentially spaced in the direction of rotation R from the leading face 124 of the reducing element 116.

In some examples, the radial heights RH8 and RH9 of the depth extensions 470, 472 are equal to or greater than 50 percent of the radial height RH1 of the reducing element 116. In some examples, the radial heights RH8 and RH9 of the depth extensions 470, 472 are equal to or greater than 75 percent of the radial height RH1 of the reducing element 116. In some examples, the radial height RH10 of the pocket portion 454 is equal to or less than 25 percent of the radial height RH1 of the reducing element 116. In some examples, the radial height RH10 is equal to or less than 15 percent of the radial height RH1 of the reducing element 116. In some examples, the radial height RH10 is equal to or less than 10 percent of the radial height RH1 of the reducing element 116.

### Examples

Illustrative examples of the material reducing apparatus disclosed herein are provided below. An embodiment of the material reducing apparatus may include any one or more, and any combination of, the examples described below.
Example 1 is a material reducing apparatus that includes a rotary reducing component that has a central rotational axis. The rotary reducing component is rotatable in a reducing direction. The material reducing apparatus includes a reducing element mount attached to the rotary reducing component and a reversible reducing element mounted to the reducing element mount. The reducing element includes a leading front side having a main front face, a first cutting edge, and an opposite second cutting edge being radially inwardly positioned closer to the central rotational axis from the first cutting edge. The reducing element includes a trailing rear side having a mounting face and a front face reference plane defined by the main front face. The material reducing apparatus includes a radial reference plane that is defined by the leading most point of the first cutting edge in the reducing direction and the central rotation axis of the rotary reducing component. The material reducing apparatus includes a chip direction plane that is perpendicular with the radial reference plane and passing through the leading most part of the first cutting edge. The chip direction plane and the front face reference plane are angled with respect to one another at a chip curl angle. The chip curl angle is between about 82 degrees and 102 degrees. The rotary reducing component has a reducing boundary defined by the outer most cutting edge of the first and second cutting edges from the rotary reducing component. The reducing boundary has a diameter less than or equal to about 26 inches
In Example 2, the subject matter of Example 1 is further configured such that that first and second cutting edges are linear cutting edges.
In Example 3, the subject matter of Example 1 is further configured such that the first cutting edge is defined by a cutting insert positioned within the leading front face of the reducing element.
In Example 4, the subject matter of Example 1 is further configured such that the first cutting edge includes a plurality of sub-cutting edges angled with one another.
In Example 5, the subject matter of Example 1 is further configured such that the leading front side includes first and second rake surfaces that define first and second rake planes, respectively. The trailing rear side includes first and second relief surfaces that define first and second relief planes, respectively. The first rake surface and the first relief surface define the first cutting edge. The second rake surface and the second relief surface define the second cutting edge.
In Example 6, the subject matter of Example 5 is further configured such that the first and second relief planes are angled with the first and second rake planes, respectively, at a tip inclusive angle, wherein the tip inclusive angle is about 30 degrees.
In Example 7, the subject matter of Example 1 is further configured such that the material reducing apparatus is a forestry machine having a main frame and a boom pivotally mounted to the main frame. The rotary reducing component is mounted to the boom.
In Example 8, the subject matter of Example 1 is further configured such that the reducing element mount comprises a radial load support surface that faces outwardly from the rotational axis of the rotary reducing component. A portion of the reversible reducing element engages the radial load support surface such that radial loading on the reducing element is transferred to the reducing element mount.
Example 9 is a material reducing apparatus that includes a rotary reducing component that has a central rotational axis. The rotary reducing component is rotatable in a reducing direction. The material reducing apparatus includes a reducing element mount attached to the rotary reducing component and a reversible reducing element mounted to the reducing element mount. The reducing element includes a leading front side having a main front face, a first cutting edge, and an opposite second cutting edge being radially inwardly positioned closer to the central rotational axis from the first cutting edge. The reducing element includes a trailing rear side having a mounting face and a front face reference plane defined by the main front face. The material reducing apparatus includes a radial reference plane that is defined by the leading most point of the first cutting edge in the reducing direction and the central rotation axis of the rotary reducing component. The material reducing apparatus includes a chip direction plane that is perpendicular with the radial reference plane and passing through the leading most part of the first cutting edge. The chip direction plane and the front face reference plane are angled with respect to one another at a chip curl angle. The chip curl angle is between about 79 degrees and about 97 degrees. The rotary reducing component has a reducing boundary defined by the outer most cutting edge of the first and second cutting edges from the rotary reducing component. The reducing boundary has a diameter greater than or equal to 26 inches and less than or equal to about 56 inches.
In Example 10, the subject matter of Example 9 is further configured such that the reducing element mount comprises a radial load support surface that faces outwardly from the rotational axis of the rotary reducing component. A portion of the reversible reducing element engages the radial load support surface such that radial loading on the reducing element is transferred to the reducing element mount.
In Example 11, the subject matter of Example 9 is further configured such that the chip curl angle is about 91 degrees.
In Example 12, the subject matter of Example 9 is further configured such that the first and second cutting edges are linear cutting edges.
In Example 13, the subject matter of Example 9 is further configured such that the first cutting edge is defined by a cutting insert positioned within the leading front face of the reducing element.
In Example 14, the subject matter of Example 9 is further configured such that the first cutting edge includes a plurality of sub-cutting edges angled with one another.
In Example 15, the subject matter of Example 9 is further configured such that the material reducing apparatus is a forestry machine having a main frame and a boom pivotally mounted to the main frame. The rotary reducing component is mounted to the boom.
Example 16 is a material reducing apparatus that includes a rotary reducing component having a central rotational axis. The rotary reducing component is rotatable in a reducing direction. The material reducing apparatus includes a reducing element mount attached to the rotary reducing component and a reducing element mounted to the reducing element mount. The reducing element includes a leading face that has a cutting edge. The reducing element includes a pair of side faces that extend from the leading face to a rear trailing face. The rear trailing face is mounted to the reducing element mount and the side faces are axially spaced from one another on the rotary reducing component. The reducing element has a radial height extending away from the rotary reducing component. The material reducing apparatus includes at least one chip evacuation arrangement that includes a first depth control structure that has a reducing element portion circumferentially aligned and spaced from the leading face of reducing element on the rotary reducing component. The reducing element portion has a radial depth being at least half of the radial height of the reducing element. The chip evacuation arrangement includes a second depth control structure positioned axially adjacent a side of the reducing element. The second depth control structure has a radial height immediately axially adjacent to the reducing element that is less than or equal to 25% of the radial height of the reducing element. The chip evacuation arrangement includes a third depth control structure positioned axially adjacent the side of the reducing element, opposite the second depth control structure. The third depth control structure has a radial height immediately axially adjacent to the reducing element that is less than or equal to 25% of the radial height of the reducing element.
In Example 17, the subject matter of Example 16 is further configured such that the first, second, and third depth control structures define a u-shaped chip evacuation pocket axially adjacent both side faces of the reducing element on the rotary reducing structure and circumferentially adjacent the leading front face of the reducing element on the rotary reducing structure.
In Example 18, the subject matter of Example 17 is further configured such that a portion of the u-shaped chip evacuation pocket circumferentially adjacent the leading front face of the reducing element includes a leading most boundary spaced away from the leading face of the reducing element in the reducing direction, the leading most boundary being defined by at least the reducing element portion of the first depth control structure.
In Example 19, the subject matter of Example 18 is further configured such that the leading most boundary is defined by the reducing element portion of the first depth control structure, and a reducing element portion of the second depth control structure, the reducing element portion of the second depth control structure being axially aligned and spaced from the reducing element portion of the first depth control structure, the reducing element portion of the second depth control structure having a radial depth at least half of the radial height of the reducing element.
In Example 20, the subject matter of Example 19 is further configured such that the leading most boundary is defined by the reducing element portion of the first depth control structure, the second reducing element portion of the second depth control structure, and a reducing element portion of the third depth control structure, the reducing element portion of the third depth control structure being axially aligned and spaced from the reducing element portion of the first depth control structure and the reducing element portion of the second depth control structure, the reducing element portion of the third depth control structure having a radial depth at least half of the radial height of the reducing element.
In Example 21, the subject matter of Example 16 is further configured such that a plurality of reducing elements mounted to a plurality of reducing element mounts on the rotary reducing component. The material reducing apparatus includes a plurality of chip evacuation arrangements corresponding to the plurality of the reducing elements.
In Example 22, the subject matter of Example 16 is further configured such that the first, second, and third depth control structures of each chip evacuation arrangement are each circumferentially aligned and spaced from a leading face of the reducing element on the rotary reducing component.
In Example 23, the subject matter of Example 16 is further configured such that the leading face of the reducing element includes a main front face, a first cutting edge, and an opposite second cutting edge being radially inwardly positioned closer to the central rotational axis from the first cutting edge. The reducing element further includes a radial reference plane defined by the leading most point of the first cutting edge in the reducing direction and the central rotation axis of the rotary reducing component. The reducing element further includes a chip direction plane being perpendicular with the radial reference plane and passing through the leading most part of the first cutting edge. The chip direction plane and the front face reference plane are angled with respect to one another at a chip curl angle.
In Example 24, the subject matter of Example 22 is further configured such that the rotary reducing component has a reducing boundary defined by an outer most cutting edge, and wherein the chip curl angle is between about 82 degrees and 102 degrees when the reducing boundary has a diameter less than or equal to about 26 inches.
In Example 25, the subject matter of Example 23 is further configured such that the rotary reducing component has a reducing boundary defined by an outer most cutting edge, and wherein the chip curl angle is between about 79 degrees and about 97 degrees when the reducing boundary has a diameter greater than or equal to 26 inches and less than or equal to about 56 inches.

The various embodiments described above are provided by way of illustration only and should not be construed to limit the claims attached hereto. Those skilled in the art will readily recognize various modifications and changes that may be made without following the example embodiments and applications illustrated and described herein, and without departing from the true spirit and scope of the following claims.

## Claims

1. A material reducing apparatus comprising:
a rotary reducing component having a central rotational axis, the rotary reducing component being rotatable in a reducing direction;
a reducing element mount attached to the rotary reducing component;
a reducing element mounted to the reducing element mount, the reducing element having a leading face having a cutting edge, the reducing element having a pair of side faces extending from the leading face to a rear trailing face, the rear trailing face being mounted to the reducing element mount and the side faces axially spaced from one another on the rotary reducing component, and wherein the reducing element has a radial height extending away from the rotary reducing component;
at least one chip evacuation arrangement comprising:
a first depth control structure having a reducing element portion circumferentially aligned and spaced from the leading face of reducing element on the rotary reducing component, the reducing element portion having a radial depth being at least half of the radial height of the reducing element;
a second depth control structure positioned axially adjacent a side of the reducing element, the second depth control structure having a radial height immediately axially adjacent to the reducing element, wherein the radial height of the second depth control structure is less than or equal to 25% of the radial height of the reducing element; and
a third depth control structure positioned axially adjacent the side of the reducing element, opposite the second depth control structure, the third depth control structure having a radial height immediately axially adjacent to the reducing element, wherein the radial height of the third depth control structure is less than or equal to 25% of the radial height of the reducing element.

2. The material reducing apparatus of any of the preceding claims, wherein the first, second, and third depth control structures define a u-shaped chip evacuation pocket axially adjacent both side faces of the reducing element on the rotary reducing structure and circumferentially adjacent the leading front face of the reducing element on the rotary reducing structure.

3. The material reducing apparatus of any of the preceding claims, wherein a portion of the u-shaped chip evacuation pocket circumferentially adjacent the leading front face of the reducing element includes a leading most boundary spaced away from the leading face of the reducing element in the reducing direction, the leading most boundary being defined by at least the reducing element portion of the first depth control structure.

4. The material reducing apparatus of any of the preceding claims, wherein the leading most boundary is defined by the reducing element portion of the first depth control structure, and a reducing element portion of the second depth control structure, the reducing element portion of the second depth control structure being axially aligned and spaced from the reducing element portion of the first depth control structure, the reducing element portion of the second depth control structure having a radial depth at least half of the radial height of the reducing element.

5. The material reducing apparatus of any of the preceding claims, wherein the leading most boundary is defined by the reducing element portion of the first depth control structure, the second reducing element portion of the second depth control structure, and a reducing element portion of the third depth control structure, the reducing element portion of the third depth control structure being axially aligned and spaced from the reducing element portion of the first depth control structure and the reducing element portion of the second depth control structure, the reducing element portion of the third depth control structure having a radial depth at least half of the radial height of the reducing element.

6. The material reducing apparatus of any of the preceding claims, further comprising a plurality of reducing elements mounted to a plurality of reducing element mounts on the rotary reducing component, wherein the material reducing apparatus includes a plurality of chip evacuation arrangements corresponding to the plurality of the reducing elements.

7. The material reducing apparatus of any of the preceding claims, wherein the first, second, and third depth control structures of each chip evacuation arrangement are each circumferentially aligned and spaced from a leading face of the reducing element on the rotary reducing component.

8. The material reducing apparatus of any of the preceding claims, wherein the leading face of the reducing element includes a main front face, a first cutting edge, and an opposite second cutting edge being radially inwardly positioned closer to the central rotational axis from the first cutting edge, the reducing element further including:
a radial reference plane defined by the leading most point of the first cutting edge in the reducing direction and the central rotation axis of the rotary reducing component;
a chip direction plane being perpendicular with the radial reference plane and passing through the leading most part of the first cutting edge;
wherein the chip direction plane and the front face reference plane are angled with respect to one another at a chip curl angle.

9. The material reducing apparatus of any of the preceding claims, wherein the rotary reducing component has a reducing boundary defined by an outer most cutting edge, and wherein the chip curl angle is between about 82 degrees and 102 degrees when the reducing boundary has a diameter less than or equal to about 26 inches.

10. The material reducing apparatus of any of the preceding claims, wherein the rotary reducing component has a reducing boundary defined by an outer most cutting edge, and wherein the chip curl angle is between about 79 degrees and about 97 degrees when the reducing boundary has a diameter greater than or equal to 26 inches and less than or equal to about 56 inches.

11. The material reducing apparatus of any of the preceding claims, wherein the chip curl angle is about 91 degrees.

12. The material reducing apparatus of any of the preceding claims, wherein the leading face of the reducing element includes first and second rake surfaces that define first and second rake planes, respectively, and wherein the trailing rear side includes first and second relief surfaces that define first and second relief planes, respectively, wherein the first rake surface and the first relief surface define the first cutting edge, and wherein the second rake surface and the second relief surface define the second cutting edge, wherein the first and second relief planes are angled with the first and second rake planes, respectively, at a tip inclusive angle, wherein the tip inclusive angle is about 30 degrees.

13. The material reducing apparatus of any of the preceding claims, wherein the material reducing apparatus is a forestry machine having a main frame and a boom pivotally mounted to the main frame, and wherein the rotary reducing component is mounted to the boom.

14. The material reducing apparatus of any of the preceding claims, wherein the reducing element mount comprises a radial load support surface that faces outwardly from the rotational axis of the rotary reducing component, and wherein a portion of the reversible reducing element engages the radial load support surface such that radial loading on the reducing element is transferred to the reducing element mount.
